(19) Europäisches Patentamt / European Patent Office / Office européen des brevets

(11) **EP 2 759 692 A1**

(12) **EUROPEAN PATENT APPLICATION**
published in accordance with Art. 153(4) EPC

(43) Date of publication:
**30.07.2014 Bulletin 2014/31**

(51) Int Cl.:
**F02D 23/00** (2006.01)

(21) Application number: **11872829.4**

(22) Date of filing: **20.09.2011**

(86) International application number:
**PCT/JP2011/071323**

(87) International publication number:
**WO 2013/042181 (28.03.2013 Gazette 2013/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventor: **Nakamura, Sho**
**Toyota-shi**
**Aichi 471-8571 (JP)**

(74) Representative: **Albutt, Anthony John**
**D Young & Co LLP**
**120 Holborn**
**London EC1N 2DY (GB)**

(54) **DEVICE FOR CONTROLLING INTERNAL COMBUSTION ENGINE**

(57) The invention relates to a control device of an engine, calculating a control signal (Svb) to be supplied to a controlled object (60V) for controlling the controlled amount to a target controlled amount and when a history of a change of the controlled amount does not correspond to a predetermined history, supplies the control signal to the controlled object and on the other hand, when the history of the change of the controlled amount corresponds to the predetermined history, the device corrects the control signal and then, supplies the corrected control signal to the controlled object. According to the invention, a model constructed on the basis of the Prisach distribution function is prepared as a model relating to the controlled object for calculating a correction coefficient (Khid, Khdi) for correcting the control signal such that the hysteresis of the controlled object decreases, the correction of the control signal is accomplished by correcting the control signal by the correction coefficient calculated by the model, a parameter of the model is identified on the basis of the change amount of the activation condition of the controlled object during the change of the activation condition of the controlled object and the parameter of the model is corrected on the basis of the identified parameter.

FIG.11

CORRECTION OF MODEL PARAMETER

ACQUIRING Ft — 200

Ft = 1 ? — 201 — No

ACQURING AND MEMORIZING Dv, Sv — 202

ACQUIRING Ft — 203

Ft = 1 ? — 204 — Yes / No

CALCULATING $\Delta Sv$ — 205

CALCULATING $\Delta Sve$ — 206

CORRECTING MP — 207

RETURN

EP 2 759 692 A1

**Description**

[TECHNICAL FIELD]

This invention relates to a control device of an internal combustion engine.

[BACKGROUND ART]

A control device of a turbocharger is described in the Patent Literature 1. The turbocharger described in the Patent Literature 1 has an exhaust turbine arranged in an exhaust passage and variable vanes for adjusting a flow amount or a flow rate of an exhaust gas flowing into the exhaust turbine. The opening degree of the variable vane is adjusted by an actuator. The control device described in the Patent Literature 1 calculates a command value to be supplied to the actuator for accomplishing a target turbocharging pressure which is a target value of a turbocharging pressure (i.e. a pressure of a gas in an intake passage compressed by a compressor of the turbocharger) and then, supplys this calculated command value to the actuator to control the turbocharging pressure to the target turbocharging pressure.

In the actuator described in the Patent Literature 1, there is a hysteresis relating to the actuation of the actuator relative to the command value supplied to the actuator. Thus, even when the command value supplied to the actuator for increasing the turbocharging pressure to making the turbocharging pressure correspond to the target turbocharging pressure is equal to that for decreasing the turbocharging pressure to making the turbocharging pressure correspond to the same target turbocharging pressure as the aforementioned target turbocharging pressure, the turbocharging pressure may not accurately correspond to the target turbocharging pressure.

In the control device described in the Patent Literature 1, the command values, which are different from each other, supplied to the actuator for increasing the turbocharging pressure so as to make the turbocharging pressure correspond to the target turbocharging pressure and for decreasing the turbocharging pressure so as to make the turbocharging pressure correspond to the target turbocharging pressure are calculated such that the turbocharging pressure accurately corresponds to the target turbocharging pressure even when the turbocharging pressure should be increased in order to make the turbocharging pressure correspond to the target turbocharging pressure or even when the turbocharging pressure should be decreased in order to make the turbocharging pressure correspond to the same target turbocharging pressure as the aforementioned target turbocharging pressure.

As described above, in the Patent Literature 1, described is a concept in which the command values, which are different from each other, supplied to the actuator for increasing the turbocharging pressure so as to make the turbocharging pressure to the target turbocharging pressure and for decreasing the turbocharging pressure so as to make the turbocharging pressure to the same target turbocharging pressure as the aforementioned target turbocharging pressure are set in consideration of the hysteresis relating to the activation of the actuator relative to the command value supplied to the actuator.

[CITATION LIST]

[PATENT LITERATURE]

[PATENT LITERATURE 1] Unexamined JP Patent Publication No.2001-132463
[PATENT LITERATURE 2] Unexamined JP Patent Publication No.2002-257673

[SUMMARY OF INVENTION]

[PROBLEM TO BE SOLVED]

The object of the invention is to accurately control a predetermined controlled amount to the target value by a method different from the conventional method in the case that a controlled object for controlling the controlled amount has the hysteresis in the change of its activation condition.

[MEANS FOR SOLVING THE PROBLEM]

The invention of this application relates to a control device of an internal combustion engine, comprising a controlled object for controlling a predetermined controlled amount, wherein the device calculates a control signal to be supplied to the controlled object for controlling the controlled amount to a target controlled amount which is a target value of the controlled amount and then, when a history of a change of the controlled amount does not correspond to a predetermined history, the device supplies the calculated control signal to the controlled object and on the other hand, when the history of the change of the controlled amount corresponds to the predetermined history, the device corrects the calculated control signal and then, supplies the corrected control signal to the controlled object.

Further, in this invention, the controlled object has a hysteresis in its activation. Further, a hysteresis model constructed on the basis of the Prisach distribution function is prepared as a model relating to the controlled object for calculating a correction coefficient for correcting the control signal supplied to the controlled object such that the hysteresis of the controlled object decreases. Further, the correction of the control signal calculated when the history of the change of the controlled amount corresponds to the predetermined history is accomplished by correcting the calculated control signal by the correction coefficient calculated by the hysteresis model.

Further, in this invention, a model parameter of the hysteresis model is identified on the basis of the change amount of the activation condition of the controlled object during the change of the activation condition of the controlled object and then, the model parameter of the hysteresis model is corrected on the basis of the identified model parameter.

In this regard, in this invention, the manner of the correction of the model parameter of the hysteresis model on the basis of the identified model parameter is not limited to a particular manner and for example, the model parameter of the hysteresis model may be corrected by replacing the model parameter of the hysteresis model with the identified model parameter or the model parameter of the hysteresis model may be corrected by modifing the model parameter of the hysteresis model on the basis of the identified model parameter.

According to this invention, the following effect is obtained. That is, regarding a plurality of the engines each comprising the controlled object having the same structure, the activation property of the controlled object relative to the control signal supplied to the controlled object may differ from one engine to another. In this case, if the hysteresis model including the model parameter identified relating to the controlled object of one particular engine of these engines is used for performing the correction of the control signal supplied to the controlled object of the other engine, the desired control property relating to the control of the controlled amount may not be obtained. Obviously, if the hysteresis model including the model parameter identified relating the controlled object of each engine is used for performing the correction of the control signal supplied to the controlled object of each engine, the desired control property relating to the control of the controlled amount is obtained. In this regard, the identification of the model parameter relating to each engine to construct the hysteresis model involves a considerably large burden. Further, the activation property of the controlled object may change with the increase of the usage time of the controlled object. In this case, even if the hysteresis model including the model parameter identified relating to the controlled object of each engine is used for performing the control of the controlled object of each engine, the desired control property relating to the control of the controlled amount may not be obtained.

According to this invention, the model parameter of the hysteresis model is identified on the basis of the change amount of the activation condition of the controlled object during the change of the activation condition of the controlled object and then, the model parameter of the hysteresis model is corrected on the basis of the identified model parameter. Therefore, even if the hysteresis model including the model parameter identified relating to the controlled object of the engine other than the engine of this invention is used for the correction of the control signal supplied to the controlled object of the engine of this invention, the model parameter of the hysteresis model is corrected to a value suitable for the activation property of the controlled object of this invention and if the activation property of the controlled object of this invention changes with the increase of the usage time of the controlled object, the model parameter of the hysteresis model is corrected to a value suitable for the changed activation property of the controlled object of this invention. Thus, according to this invention, obtained is the effect that the desired control property relating to the control of the controlled amount can be obtained and therefore, a property relating to the emission of the exhaust gas discharged from the combustion chamber (hereinafter, this property may be referred to as --exhaust emission property--) is maintained high.

Further, according to the another invention, in the aforementioned invention, the model parameters are prepared depending on the operation condition of the engine, the model parameter corresponding to the operation condition of the engine of the prepared model parameters is used as the model parameter of the hysteresis model and the model parameter, which is prepared corresponding to the operation condition of the engine when the identification of the model parameter is performed, is corrected on the basis of the identified model parameter. Further, according to this invention, when an engine output, which is an output from the engine, is smaller than a predetermined value, the model parameter is identified on the basis of the change amount of the activation condition of the controlled object and then, the model parameter, which is prepared corresponding to the operation condition of the engine when the identification of the model parameter is performed on the basis of the identified model parameter, is corrected.

In this regard, in this invention, the predetermined value relating to the engine output is not limited to a particular value and for example, may be a value of the engine output when the engine output, which is minimally necessary for maintaining the operation of the engine when the engine is installed in the vehicle and the speed of the vehicle is zero, is output from the engine (i.e. when the engine is under the idling condition) or may be zero.

According to this invention, the following effect is obtained. That is, the number of the performance of the correction of the model parameter corresponding to the engine operation condition (i.e. the operation condition of the engine), which occurs with a relatively high frequency when the engine output is larger than or equal to the predetermined value, is relatively large. In other words, the number of the performance of the correction of the model parameter corresponding to the engine operation condition, which occurs with a relatively low frequency when the engine output is larger than or equal to the predetermined value, is relatively small. The engine operation condition, which occurs with a relatively low frequency when the engine output is larger than or equal to the predetermined value, occurs with a relatively high frequency when the engine output is smaller than the predetermined value.

In this regard, according to this invention, when the engine output is smaller than the predetermined value, the model parameter is identified and then, the model parameter corresponding to the current engine operation condition is corrected on the basis of the identified model parameter. Thus, according to this invention, obtained is the effect that the desired control property relating to the control of the controlled amount is obtained for all engine operation condition when the activation condition of the controlled object is controlled by the control signal corrected by the correction coefficient calculated using the hysteresis model.

According to the further invention of this application, in the aforementioned invention, the predetermined history is a history of the change of the controlled amount when the controlled amount increases toward the increased target controlled amount in the case that the target controlled amount is increased and the controlled amount converges on the increased target controlled amount and thereafter, the target controlled amount is decreased. Further, when it is predicted that the target controlled amount is decreased after the target controlled amount is increased and the controlled amount converges on the increased target controlled amount, a controlled amount increase converging time, which is a time when the controlled amount converges on the increased target controlled amount, is predicted and the correction coefficient for correcting the control signal calculated at the predicted controlled amount increase converging time is calculated as a prediction correction coefficient by using the hysteresis model. Then, the control signal calculated at a time earlier than the controlled amount increase converging time by a predetermined time is corrected by the calculated prediction correction coefficient and then, the corrected control signal is supplied to the controlled object.

Otherwise, according to this invention, the predetermined history is a history of the change of the controlled amount when the controlled amount decreases toward the decreased target controlled amount in the case that the target controlled amount is decreased and the controlled amount converges on the decreased target controlled amount and thereafter, the target controlled amount is increased. Further, when it is predicted that the target controlled amount is decreased after the target controlled amount is decreased and the controlled amount converges on the decreased target controlled amount, a controlled amount decrease converging time, which is a time when the controlled amount converges on the decreased target controlled amount, is predicted and the correction coefficient for correcting the control signal calculated at the predicted controlled amount decrease converging time is calculated as a prediction correction coefficient by using the hysteresis model. Then, the control signal calculated at a time earlier than the controlled amount decrease converging time by a predetermined time is corrected by the calculated prediction correction coefficient and then, the corrected control signal is supplied to the controlled object.

According to this invention, the following effect is obtained. That is, when the target controlled amount is decreased after the controlled amount converges on the increased target controlled amount and then, the change of the controlled amount toward the decreased target controlled amount is started, a delay occurs in the activation of the controlled object due to the hysteresis of the activation of the controlled object. Further, when the target controlled amount is increased after the controlled amount converges on the decreased target controlled amount and then, the change of the controlled amount toward the increased target controlled amount is started, a delay occurs in the activation of the controlled object due to the hysteresis of the activation of the controlled object. Therefore, in order to obtain the desired control property relating to the control of the controlled amount and therefore, obtain the high exhaust emission property at the controlled amount increase or decrease converging time, it is preferred that before the controlled amount is changed toward the decreased target controlled amount in the case that the target controlled amount is decreased after the target controlled amount is increased (in particular, immediately before the controlled amount is changed toward the decreased target controlled amount) or before the controlled amount is changed toward the increased target controlled amount in the case that the target controlled amount is increased after the target controlled amount is decreased (in particular, immediately before the controlled amount is changed toward the increased target controlled amount), the control signal is corrected such that the delay of the activation of the controlled object at the controlled amount increase or decrease converging time is avoided.

In this regard, according to this invention, the control signal calculated before the controlled amount increase or decrease converging time is corrected by the prediction correction coefficient and then, this corrected control signal is supplied to the controlled object. Therefore, the delay of the activation of the controlled object due to the hysteresis of the activation of the controlled object is avoided at the controlled amount increase or decrease converging time. Thus, according to this invention, obtained is the effect that the desired control property relating to the control of the controlled amount is obtained and therefore, the high exhaust emission property is obtained.

In this regard, the predetermined history of the aforementioned invention may be any history as far as it is a history predetermined depending on the various requirements. Therefore, as the predetermined history of the aforementioned invention, for example, in the case that the target controlled amount is increased due to the requirement of the acceleration of the engine and then, the controlled amount converges on the increased target controlled amount and thereafter, the target controlled amount is decreased due to the requirement of the deceleration of the engine, the history of the change of the controlled amount, which is the history when the controlled amount increases toward the increased target controlled amount, can be employed or in the case that the target controlled amount is decreased due to the requirement of the acceleration of the engine and then, the controlled amount converges on the decreased target controlled amount and thereafter, the target controlled amount is increased due to the requirement of the deceleration of the engine, the history of the change of the controlled amount, which is the history when the controlled amount decreases toward the decreased target controlled amount, can be employed.

In this case, the following effect is obtained. That is, in the case that there is the hysteresis in the activation of the controlled object when the controlled amount converges on the target controlled amount increased due to the requirement of the acceleration of the engine and thereafter, the target controlled amount is decreased and then, the change of the controlled amount toward the decreased target controlled amount is started or when the controlled amount converges on the target controlled amount decreased due to the requirement of the acceleration of the engine and thereafter, the target controlled amount is increased and then, the change of the controlled amount toward the increased target controlled amount is started, the control property of the controlled amount is considerably different from the desired control property and therefore, the exhaust emission property may considerably decrease.

In this regard, in the aforementioned case, when it is predicted that the target controlled amount is decreased after the target controlled amount is increased due to the requirement of the acceleration of the engine and then, the controlled amount converges on the increased target controlled amount, the control signal calculated before the controlled amount increase converging time is corrected by the prediction correction coefficient and then, this corrected control signal is supplied to the controlled object. Otherwise, according to this invention, when it is predicted that the target controlled amount is increased after the target controlled amount is decreased due to the requirement of the acceleration of the engine and then, the controlled amount converges on the decreased target controlled amount, the control signal calculated before the controlled amount decrease converging time is corrected by the prediction correction coefficient and then, this corrected control signal is supplied to the controlled object. Therefore, the delay of the activation of the controlled object due to the hysteresis of the activation of the controlled object is avoided at the controlled amount increase or decrease converging time. Thus, in the aforementioned case, obtained is the effect that the desired control property relating to the control of the controlled amount is obtained when the acceleration of the engine is required and therefore, the considerable decrease of the exhaust emission property is restricted.

Further, as the predetermined history of the aforementioned invention, for example, in the case that the target controlled amount is increased due to the requirement of the deceleration of the engine and then, the controlled amount converges on the increased target controlled amount and thereafter, the target controlled amount is decreased due to the requirement of the acceleration of the engine, the history of the change of the controlled amount, which is the history when the controlled amount increases toward the increased target controlled amount, can be employed or in the case that the target controlled amount is decreased due to the requirement of the deceleration of the engine and then, the controlled amount converges on the decreased target controlled amount and thereafter, the target controlled amount is increased due to the requirement of the deceleration of the engine, the history of the change of the controlled amount, which is the history when the controlled amount decreases toward the decreased target controlled amount, can be employed.

In this case, the following effect is obtained. That is, in the case that there is the hysteresis in the activation of the controlled object when the controlled amount converges on the target controlled amount increased due to the requirement of the deceleration of the engine and thereafter, the target controlled amount is decreased and then, the change of the controlled amount toward the decreased target controlled amount is started or when the controlled amount converges on the target controlled amount decreased due to the requirement of the deceleration of the engine and thereafter, the target controlled amount is increased and then, the change of the controlled amount toward the increased target controlled amount is started, the control property of the controlled amount is considerably different from the desired control property and therefore, the exhaust emission property may considerably decrease.

In this regard, in the aforementioned case, when it is predicted that the target controlled amount is decreased after the target controlled amount is increased due to the requirement of the deceleration of the engine and then, the controlled amount converges on the increased target controlled amount, the control signal calculated before the controlled amount increase converging time is corrected by the prediction correction coefficient and then, this corrected control signal is supplied to the controlled object. Otherwise, according to this invention, when it is predicted that the target controlled amount is increased after the target controlled amount is decreased due to the requirement of the deceleration of the engine and then, the controlled amount converges on the decreased target controlled amount, the control signal calculated before the controlled amount decrease converging time is corrected by the prediction correction coefficient and then, this corrected control signal is supplied to the controlled object. Therefore, the delay of the activation of the controlled object due to the hysteresis of the activation of the controlled object is avoided at the controlled amount increase or decrease converging time. Thus, in the aforementioned case, obtained is the effect that the desired control property relating to the control of the controlled amount is obtained when the deceleration of the engine is required and therefore, the considerable decrease of the exhaust emission property is restricted.

Further, the controlled object of the aforementioned invention may be any object as far as it is an object for controlling the predetermined controlled amount and for example, in the case that the engine comprises a turbocharger and the turbocharger has a compressor arranged in an intake passage, an exhaust turbine arranged in an exhaust passage and exhaust flow change means for changing the flow mount or the flow rate of the exhaust gas flowing through the exhaust turbine, the exhaust flow change means can be employed as the controlled object. In this case, the controlled amount is the pressure of the gas in the intake passage compressed by the compressor.

In this case, the following effect is obtained. That is, the activation of the exhaust flow change means of the turbocharger is subject to the pressure of the exhaust gas which reaches the exhaust flow change means. Then, the activation property of the exhaust flow change means when the activation condition of the exhaust flow change means is changed in a certain direction is different from that when the activation condition of the exhaust flow change means is changed in a direction opposite to the certain direction. That is, the activation of the exhaust flow change means has a hysteresis.

In this regard, in the aforementioned case, the model parameter of the hysteresis model is identified on the basis of the change amount of the activation condition of the exhaust flow change means during the change of the activation condition of the exhaust flow change means and then, the model parameter of the hysteresis model is corrected on the basis of the identified model parameter. Thus, according to the aforementioned case, obtained is the effect that the desired control property relating to the control of the turbocharging pressure can be obtained and therefore, a property relating to the emission of the exhaust gas is maintained high.

Further, in the aforementioned case, in the case that the model parameter is identified when the engine output is smaller than a predetermined value and then, the model parameter corresponding to the current engine operation condition is corrected on the basis of the identified model parameter, obtained is the effect that the desired control property relating to the control of the turbocharging pressure can be obtained for all engine operation condition when the activation condition of the exhaust flow change means is controlled by the control signal corrected by the correction coefficient calculated using the hysteresis model.

Further, in the aforementioned case, if the predetermined history is a history of the change of the turbocharging pressure when the turbocharging pressure increases toward an increased target turbocharging pressure in the case that the target turbocharging pressure is increased and the turbocharging pressure converges on the increased target turbocharging pressure and thereafter, the target turbocharging pressure is decreased and when it is predicted that the target turbocharging pressure is decreased after the target turbocharging pressure is increased and the turbocharging pressure converges on the increased target turbocharging pressure, a turbocharging pressure increase converging time, which is a time when the turbocharging pressure converges on the increased target turbocharging pressure, is predicted and the correction coefficient for correcting the control signal calculated at the predicted turbocharging pressure increase converging time is calculated as a prediction correction coefficient by using the hysteresis model, the control signal calculated earlier than the turbocharging pressure increase converging time by a predetermined time is corrected by the calculated prediction correction coefficient and then, this corrected control signal is supplied to the exhaust flow change means or if the predetermined history is a history of the change of the turbocharging pressure when the turbocharging pressure decreases toward the decreased target turbocharging pressure in the case that the target turbocharging pressure is decreased and the turbocharging pressure converges on the decreased target turbocharging pressure and thereafter, the target turbocharging pressure is increased and when it is predicted that the target turbocharging pressure is decreased after the target turbocharging pressure is decreased and the turbocharging pressure converges on the decreased target turbocharging pressure, a turbocharging pressure decrease converging time, which is a time when the turbocharging pressure converges on the decreased target turbocharging pressure, is predicted and the correction coefficient for correcting the control signal calculated at the predicted turbocharging pressure decrease converging time is calculated as a prediction correction coefficient by using the hysteresis model, the control signal calculated at a time earlier than the turbocharging pressure decrease converging time by a predetermined time is corrected by the calculated prediction correction coefficient and then, the corrected control signal is supplied to the exhaust flow change means, the delay of the activation of the exhaust flow change means due to the hysteresis of the activation of the exhaust flow change means is avoided at the turbocharging pressure increase or decrease converging time. Thus, obtained is the effect that the desired control property relating to the control of the turbocharging pressure is obtained and therefore, the high exhaust emission property is obtained.

Further, in the aforementioned case, if the predetermined history is a history of the change of the turbocharging pressure when the turbocharging pressure increases toward the increased target turbocharging pressure in the case that the target turbocharging pressure is increased due to the requirement of the acceleration of the engine and then, the turbocharging pressure converges on the increased target turbocharging pressure and thereafter, the target turbocharging pressure is decreased due to the requirement of the deceleration of the engine, the delay of the activation of the exhaust flow change means due to the hysteresis of the activation of the exhaust flow change means is avoided at the turbocharging pressure increase converging time. Thus, obtained is the effect that the desired control property relating to the control of the turbocharging pressure is obtained when the acceleration of the engine is required and therefore, the considerable decrease of the exhaust emission property is restricted.

Further, in the aforementioned case, if the predetermined history is a history of the change of the turbocharging pressure when the turbocharging pressure decreases toward the decreased target turbocharging pressure in the case that the target turbocharging pressure is decreased due to the requirement of the deceleration of the engine and then, the turbocharging pressure converges on the decreased target turbocharging pressure and thereafter, the target turbocharging pressure is increased due to the requirement of the acceleration of the engine, the delay of the activation of the exhaust flow change means due to the hysteresis of the activation of the exhaust flow change means is avoided at the turbocharging pressure decrease converging time. Thus, obtained is the effect that the desired control property relating to the control of the turbocharging pressure is obtained when the acceleration of the engine is required after the deceleration of the engine is required and therefore, the considerable decrease of the exhaust emission property is restricted.

[BRIEF DESCRIPTION OF THE DRAWINGS]

[FIG.1] Fig.1 is a view showing an internal combustion engine which a control device of the invention is applied.

[FIG.2] Fig.2 is a view showing an exhaust turbine of a turbocharger of the engine shown in Fig.1.

[FIG.3] Fig.3(A) is a view showing a map used for the acquisition of a base fuel injection amount, Fig.3(B) is a view showing a map used for the acquisition of a base throttle valve opening degree and Fig.3(C) is a view showing a map used for the acquisition of a base turbocharging pressure.

[FIG.4] Fig.4 is a view showing a change amount of a vane control signal necessary for changing an increase direction vane opening degree and a decrease direction vane opening degree on the basis of the Preisach distribution function.

[FIG.5] Fig.5(A) is a view used for describing the change amount of the vane control signal necessary for increasing the vane opening degree from a certain vane opening degree (-Dv1) to a medium vane opening degree (0) and Fig. 5(B) is a view used for describing the change amount of the vane control signal necessary for increasing the vane opening degree from a certain vane opening degree (-Dv1) to another certain vane opening degree (Dv1).

[FIG.6] Fig.6(A) is a view used for describing the change amount of the vane control signal necessary for increasing the vane opening degree from a certain vane opening degree (-Dv2) to a certain vane opening degree (-Dv1) and Fig.6(B) is a view used for describing the change amount of the vane control signal necessary for increasing the vane opening degree from a certain vane opening degree (-Dv2) to a medium vane opening degree (0).

[FIG.7] Fig.7(A) is a view showing an example of a routine for performing a control of fuel injectors according to a first embodiment and Fig.7(B) is a view showing an example of a routine for performing a setting of a target fuel injection amount according to the first embodiment

[FIG.8] Fig.8(A) is a view showing an example of a routine for performing a control of a throttle valve according to the first embodiment and Fig.8(B) is a view showing an example of a routine for performing a setting of a target throttle valve opening degree according to the first embodiment

[FIG.9] Fig.9 is a view showing an example of a routine for performing a control of vanes according to the first embodiment.

[FIG.10] Fig.10 is a view showing an example of a routine for performing a setting of a target turbocharger pressure according to the first embodiment.

[FIG.11] Fig.11 is a view showing an example of a routine for performing a correction of a model parameter according to the first embodiment.

[FIG.12] Fig.12 is a view showing a map used for the acquisition of a base model parameter group.

[FIG.13] Fig.13 is a view showing an example of a routine for performing a correction of the model parameter according to a second embodiment.

[FIG.14] Fig.14 is a view partially showing an example of a routine for performing a control of the vanes according to a third embodiment.

[FIG.15] Fig.15 is a view partially showing the example of the routine for performing the control of the vanes according to the third embodiment.

[FIG.16] Fig.16 is a view partially showing the example of the routine for performing the control of the vanes according to the third embodiment.

[MODE FOR CARRYING OUT THE INVENTION]

One embodiment of the control device of the internal combustion engine of the invention will be described (hereinafter, this embodiment may be referred to as --first embodiment--). In the following description, the term "engine operaion" meansoperation of the engine-- and the term "engine speed" means --speed of the engine--.

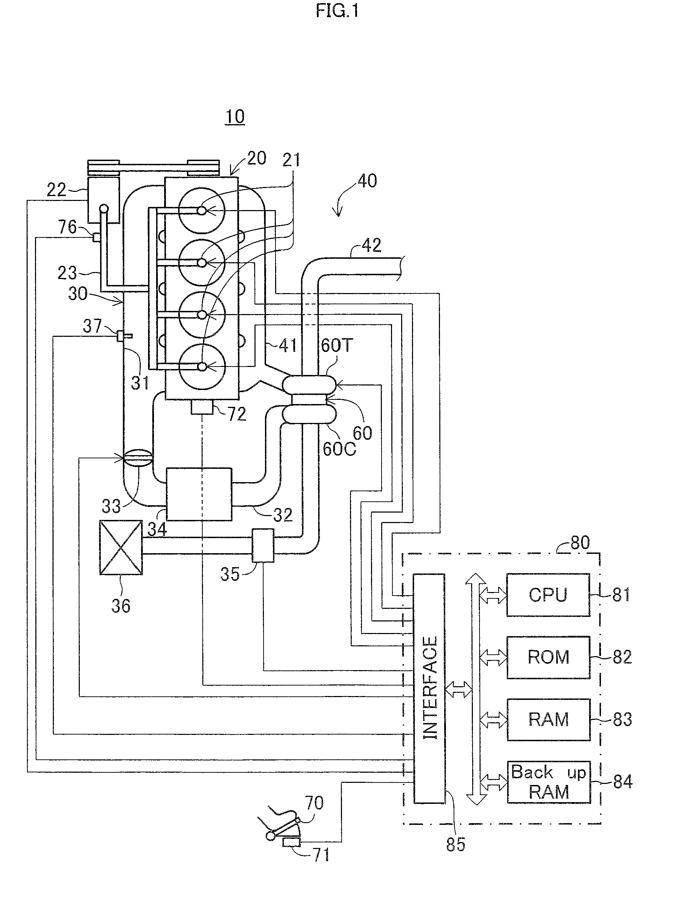

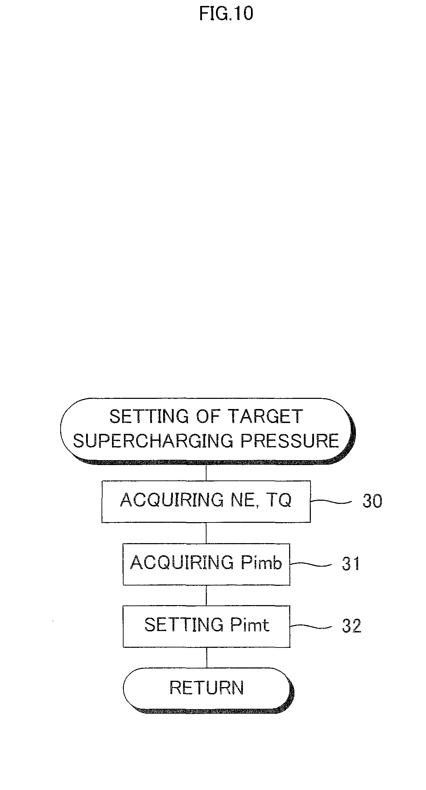

An internal combustion engine which a control device according to the first embodiment is shown in Fig.1. The engine shown in Fig.1 is a compression self-ignition type internal combustion engine (so-called diesel engine). In Fig. 1, 10 denotes the engine, 20 denotes a body of the engine 10, 21 denotes fuel injectors, 22 denotes a fuel pump, 23 denotes a fuel supply passage, 30 denotes an intake pawssage, 31 denotes an intake manifold, 32 denotes an intake pipe, 33 denotes a throttle valve, 34 denotes an intercooler, 35 denotes an air flow meter, 36 denotes an air cleaner, 37 denotes a turbocharging pressure sensor, 40 denotes an exhaust passage, 41 denotes an exhaust manifold, 42 denotes an exhaust pipe, 60 denotes a turbocharger, 70 denotes an acceleration pedal, 71 denotes an acceleration pedal depression amount sensor, 72 denotes a crank position sensor and 80 denotes an electronic control unit. The intake passage 30 is constituted by the intake manifold 31 and the intake pipe 32. The exhaust passage 40 is constituted by the exhaust manifold 41 and the exhaust pipe 42.

The electronic control unit 80 is comprised of a micro computer. Further, the unit 80 has a CPU (a micro processor) 81, a ROM (a read only memory) 82, a RAM (a random access memory) 83, a backup RAM 84 and an interface 85. These CPU 81, ROM 82, RAM 83, backup RAM 84 and interface 85 are connected to each other by a bidirectional bus.

The fuel injectors 21 are arranged on the body 20 of the engine. The fuel pump 22 is connected to the fuel injectors 21 via the fuel supply passage 23. The fuel pump 22 supplies a fuel having a high pressure to the fuel injectors 21 via the fuel supply passage 23. Further, the fuel injectors 21 is electrically connected to the interface 85 of the electronic control unit 80. The unit 80 supplies to the fuel injector 21, a command signal for injecting the fuel from the fuel injector 21. Also, the fuel pump 22 is electrically connected to the interface 85 of the unit 80. The unit 80 supplies to the fuel pump 22, a control signal for controlling an activation of the fuel pump 22 such that the pressure of the fuel supplied from the fuel pump 22 to the fuel injectors 21 is maintained at a predetermined pressure. The fuel injectors 21 are arranged on the body 20 of the engine such that a fuel injection hole of the fuel injector is exposed to the interior of the combustion chamber. Therefore, when the command signal is supplied from the electronic control unit 80 to the fuel injector 21, the fuel injector 21 injects the fuel directly into the combustion chamber.

The intake manifold 31 is divided at its one end into a plurality of pipes and these dividing pipes are connected to each intake port (not shown) formed corresponding to the combustion chamber of the body 20 of the engine. Further, the intake manifold 31 is connected at its other end to one end of the intake pipe 32.

The exhaust manifold 41 is divided at its one end into a plurality of pipes and these dividing pipes are connected to each exhaust port (not shown) formed corresponding to the combustion chamber of the body 20 of the engine. Further, the exhaust manifold 41 is connected at its other end to one end of the exhaust pipe 42.

The throttle valve 33 is arranged in the intake pipe 32. When an opening degree of the throttle valve 33 (hereinafter, this opening degree may be referred to as --throttle valve opening degree--) is changed, a flow area in the intake pipe 32 changes at an region where the throttle valve 33 is arranged. Thereby, an amount of an air, which passes through the throttle valve 33, changes and therefore, the amount of the air suctioned into the combustion chamber changes. The throttle valve 33 is electrically connected to the interface 85 of the electronic control unit 80. The unit 80 supplies to the throttle valve 33, a control signal for activating the throttle valve 33.

The intercooler 34 is arrange in the intake pipe 32 upstream of the throttle valve 33. The intercooler 34 cools the air which flows into the intercooler.

The air flow meter 35 is arranged on the intake pipe 32 upstream of the intercooler 34. Further, the air flow meter 35 is electrically connected to the interface 85 of the electronic control unit 80. The air flow meter 35 outputs an output value corresponding to the amount of the air which passes through the air flow meter. This output value is input into the electronic control unit 80. The unit 80 calculates the amount of the air, which passes through the air flow meter, on the basis of this output value and therefore, calculates the amount of the air suctioned into the combustion chamber.

The turbocharging pressure sensor 37 is arranged in the intake passage 30 downstream of the throttle valve 33 (in particular, the intake manifold 31). Further, the turbocharging pressure sensor 37 is electrically connected to the interface 85 of the electronic control unit 80. The turbocharging pressure sensor 37 outputs an output value corresponding to the pressure of the gas which surrounds the sensor (i.e. the pressure of the gas in the intake manifold 31 and therefore, the pressure of the gas suctioned into the combustion chamber). The electronic control unit 80 calculates the pressure of the gas, which surrounds the turbocharging pressure sensor 37, on the basis of this output value and therefore, calculates the pressure of the gas suctioned into the combustion chamber (hereinafter, this pressure may be refereed to as --turbocharging pressure--).

The acceleration pedal depression amount sensor 71 is connected to the acceleration pedal 70. The sensor 71 is electrically connected to the interface 85 of the electronic control unit 80. The sensor 71 outputs an output value corresponding to the depression amount of the acceleration pedal 70. This output value is input into the electronic control unit 80. The unit 80 calculates the depression amount of the acceleration pedal 70 on the basis of this output value and therefore, calculates a torque required for the engine (hereinafter, this torque may be referred to as --required torque--).

The crank position sensor 72 is arranged adjacent to the crank shaft (not shown) of the engine. The crank position sensor 72 is electrically connected to the interface 85 of the electronic control unit 80. The crank position sensor 72 outputs an output value corresponding to the rotation phase of the crank shaft. This output value is input into the electronic control unit 80. The unit 80 calculates the engine speed on the basis of this output value.

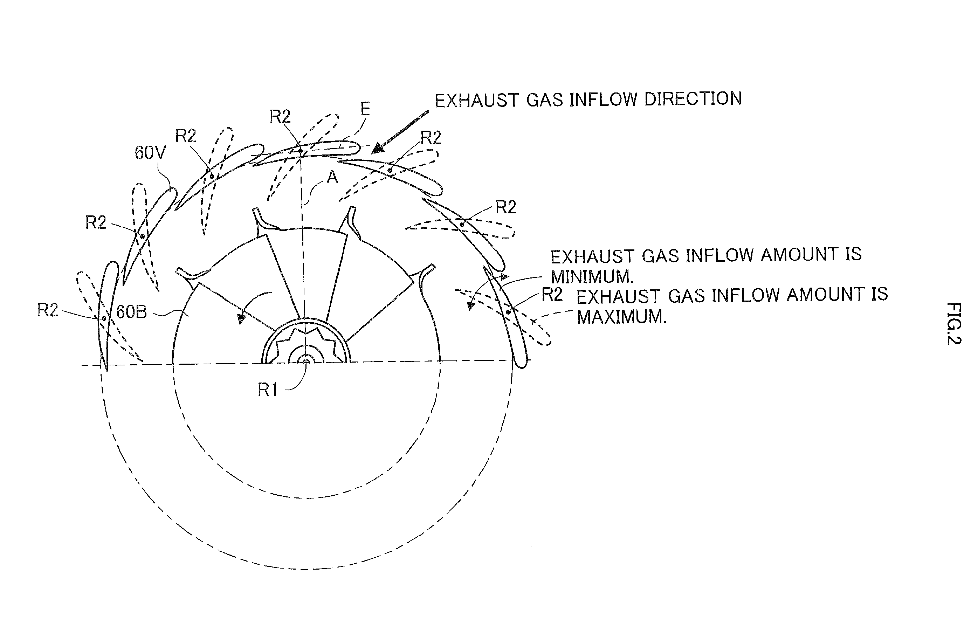

The turbocharger 60 has a compressor 60C and an exhaust turbine 60T. The turbocharger 60 can compress the gas suctioned into the combustion chamber to increase the pressure of the gas. The compressor 60C is arranged in the intake passage 30 upstream of the intercooler 34 (in particular, the intake pipe 32). The exhaust turbine 60T is arranged in the exhaust passage 40 (in particular, the exhaust pipe 42). As shown in Fig.2, the exhaust turbine 60T has an exhaust turbine body 60B and a plurality of wing-shaped vanes 60V. The compressor 60C and the exhaust turbine 60T (in particular, the exhaust turbine body 60B) are connected to each other by a shaft (not shown) and when the exhaust turbine is rotated by the exhaust gas, the rotation of the exhaust turbine is transmitted to the compressor 60C by the shaft and thereby, the compressor 60C is rotated. In this regard, the gas in the intake passage 30 downstream of the compressor is compressed by the rotation of the compressor 60C and as a result, the pressure of the gas is increased.

On the other hand, the vanes 60V are arranged radially and angularly equally spaced about a rotation center axis R1 of the exhaust turbine body such that the vanes surround the exhaust turbine body 60B. Further, each vane 60V is arranged rotatably about a corresponding axis indicated by the symbol R2 in Fig.2. When referring to the direction of the extension of each vane 60V (i.e. the direction indicated by the symbol E in Fig.2) as --extension direction-- and referring to the line, which connects the rotation center axis R1 of the exhaust turbine body 60B and the rotation axis R2 of each vane 60V to each other, (i.e. the line indicated by the symbol A in Fig.2) as --base line--, each vane 60V is rotated such that the angle between its extension direction E and the corresponding base line A is maintained equal, regarding all vanes 60V. When each vane 60V is rotated such that the angle between its extension direction E and the corresponding base line A decreases, that is, such that the flow area between the adjacent vanes 60V decreases, the pressure in the exhaust passage 40 upstream of the exhaust turbine body 60B (hereinafter, this pressure may be referred to as --exhaust pressure--) increases and as a result, the flow rate of the exhaust gas supplied to the exhaust turbine body 60B increases. Thus, the rotation speed of the exhaust turbine body 60B increases and as a result, the rotation speed of the compressor 60C and therefore, the gas, which flows in the intake passage, is largely compressed by the compressor 60C. Thus, as the angle between the extension direction E of each vane 60V and the corresponding base line (hereinafter, this angel may be referred to as --vane opening degree--) decreases, the degree of the compression of the gas by the compressor 60C, which gas flows in the intake passage, increases (i.e. the turbocharging pressure increases).

Further, the vanes 60V are electrically connected to the interface 85 of the electronic control unit 80. The unit 80 supplies to the vanes 60V, a control signal for activating the vanes 60V.

Next, a control of the fuel injector according to the first embodiment will be described. In the following description, the term "fuel injection amount" means --amount of the fuel injected from the fuel injector--. According to the first embodiment, a command signal, which is a signal for injecting from the fuel injector, the fuel having an amount corresponding to a target value of the fuel injection amount (hereinafter, this target value may be referred to as --target fuel injection amount-- and the detail thereof will be described later) set depending on the acceleration pedal depression amount, is calculated by the electronic control unit and then, this command signal is supplied from the electronic control unit to the fuel injector and thereby, the fuel injector is activated.

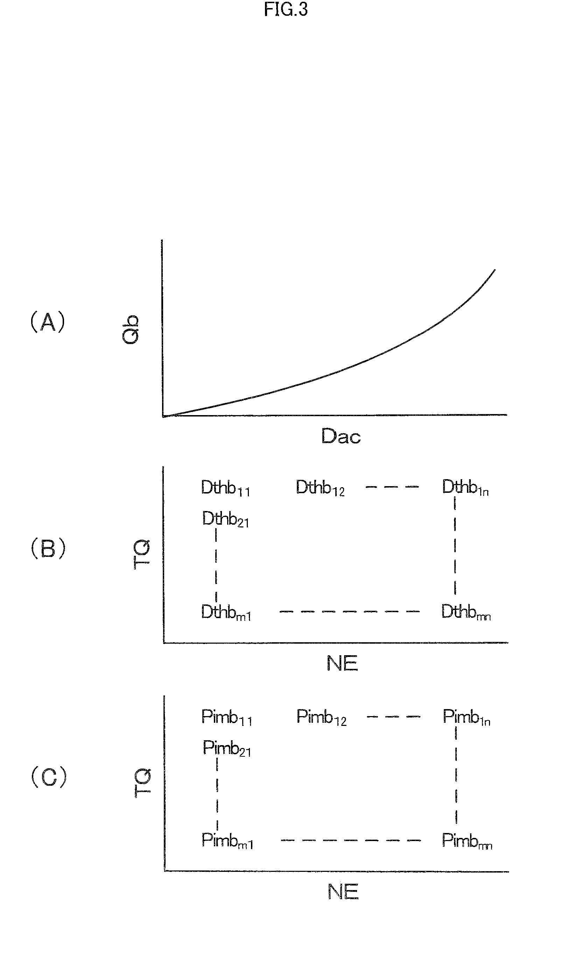

Next, the target fuel injection amount of the first embodiment will be described. In the first embodiment, optimal fuel injection amounts depending on the depression amounts of the acceleration pedal in the engine shown in Fig.1 are previously obtained by an experiment, etc. Then, these obtained fuel injection amounts are memorized in the electronic control unit as base fuel injection amounts Qb in the form of a map as a function of the acceleration pedal depression amount Dac as shown in Fig.3(A). Then, during the engine operation, the base fuel injection amount Qb corresponding to the current acceleration pedal depression amount Dac is acquired from the map of Fig.3(A) and then, this acquired base fuel injection amount Qb is set as the target fuel injection amount. In this regard, as shown in Fig.3(A), as the acceleration pedal depression amount Dac increases, the base fuel injection amount Qb increases.

Next, a control of the throttle valve according to the first embodiment will be described. In the following description, the term "engine operation condition" means operation condition of the engine-- and the term "throttle valve opening degree" means-opening degree of the throttle valve--.

According to the first embodiment, a control signal, which is a signal for activating the throttle valve so as so accomplish the throttle valve opening degree corresponding to a target value of the opening degree of the throttle valve (hereinafter, this target value may be referred to as --target throttle valve opening degree-- and the detail thereof will be described later) set depending on the engine operation condition, is calculated by the electronic control unit and then, this control signal is supplied from the electronic control unit to the throttle valve and thereby, the throttle valve is activated.

Next, the target throttle valve opening degree of the first embodiment will be described. According to the first embodiment, optimal throttle valve opening degrees depending on the engine operation condition defined by the engine speed and the required engine torque are previously obtained by an experiment, etc. Then, these obtained throttle valve opening degrees are memorized in the electronic control unit as base throttle valve opening degrees Dthb in the form of a map as a function of the engine speed NE and the required engine torque TQ as shown in Fig.3(B). Then, during the engine operation, the base throttle valve opening degree Dthb corresponding to the current engine speed NE and the current required engine toruqe TQ is acquired from the map of Fig.3(B). Then, the thus acquired base throttle valve opening degree Dthb is set as the target throttle valve opening degree. In this regard, in the map of Fig.3(B), as the engine speed NE increases, the base throttle valve opening degree Dthb increases and as the required engine torque TQ increases, the base throttle valve opening degree Dthb increases.

Next, a control of the vanes according to the first embodiment will be described. According to the first embodiment, when the target turbocharging pressure (i.e. the target value of the turbocharging pressure) increases and as a result, the turbocharging pressure becomes lower than the target turbocharging pressure or when the turbocharging pressure decreases due to various reasons and as a result, the turbocharging pressure becomes lower than the target turbocharging pressure, the vane control signal (i.e. the control signal supplied to the vanes) is changed so as to decrease the vane opening degree in order to increase the turbocharging pressure toward the target turbocharging pressure. In this regard, the change amount of the vane at this time is determined on the basis of the difference of the turbocharging pressure relative to the target turbocharging pressure (hereinafter, this difference may be referred to as --turbocharging pressure difference--) so as to decrease the turbocharging pressure difference. On the other hand, when the target turbocharging pressure decreases and as a result, the turbocharging pressure becomes higher than the target turbocharging pressure or when the turbocharging pressure increases due to various reasons and as a result, the turbocharging pressure becomes higher than the target turbocharging pressure, the vane control signal is changed so as to increase the vane opening degree in order to decrease the turbocharging pressure toward the target turbocharging pressure. In this regard, the change amount of the vane at this time is also determined on the basis of the turbocharging pressure difference so as to decrease the turbocharging pressure difference.

Next, a correction of the vane control signal according to the first embodiment will be described. According to the first embodiment, constructed on the basis of the Preisach distribution function is a model for calculating a difference between the vane control signal necessary to maintain the vane opening degree at the current vane opening degree when the vane opening degree is decreased and then, reaches a certain vane opening degree (hereinafter, this vane control signal may be referred to as --opening degree decrease converging vane control signal--) and the vane control signal necessary to maintain the vane opening degree at the current vane opening degree when the vane opening degree is increased and then, reaches the same vane opening degree as the aforementioned certain vane opening degree (hereinafter, this vane control signal may be referred to as --opening degree decrease converging vane control signal--) (hereinafter, the model may be referred to as --hysteresis model-- and the difference may be referred to as --control signal hysteresis--) and then, this constructed hysteresis model is memorized in the electronic control unit.

Then, when the target turbocharging pressure is increased and the turbocharging pressure converges on this increased turbocharging pressure and thereafter, the target turbocharging pressure is decreased, calculated by using the hysteresis model is a correction coefficient for correcting the vane control signal so as to compensate or decrease the control signal hysteresis. Then, the current vane control signal is corrected by the calculated correction coefficient such that the current vane control signal (i.e. the opening degree decrease converging vane control signal) corresponds to or approaches the opening degree increase converging vane control signal.

On the other hand, when the target turbocharging pressure is decreased and the turbocharging pressure converges on this decreased turbocharging pressure and thereafter, the target turbocharging pressure is increased, calculated by using the hysteresis model is a correction coefficient for correcting the vane control signal so as to compensate or decrease the control signal hysteresis. Then, the current vane control signal is corrected by the calculated correction coefficient such that the current vane control signal (i.e. the opening degree increase converging vane control signal) corresponds to or approaches the opening degree decrease converging vane control signal.

Next, the aforementioned correction of the vane control signal according to the first embodiment will be described in the case that the vane control signal is an electric voltage (hereinafter, this electric voltage may be referred to as --vane supplied voltage--) and it is necessary to increase the vane supplied voltage in order to decrease the vane opening degree and on the other hand, it is necessary to decrease the vane supplied voltage in order to increase the vane opening degree.

In this case, constructed on the basis of the Preisach distribution function is a model for calculating a difference between the vane supplied voltage necessary to maintain the vane opening degree at the current vane opening degree when the vane opening degree is decreased and then, reaches a certain vane opening degree (hereinafter, this vane supplied voltage may be referred to as --opening degree decrease converging vane supplied voltage--) and the vane supplied voltage necessary to maintain the vane opening degree at the current vane opening degree when the vane opening degree is increased and then, reaches the same vane opening degree as the aforementioned certain vane opening degree (hereinafter, this vane supplied voltage may be referred to as --opening degree decrease converging vane supplied voltage--) (hereinafter, the model may be referred to as --hysteresis model-- and the difference may be referred to as --supplied voltage hysteresis--) and then, this constructed hysteresis model is memorized in the electronic control unit.

Then, when the target turbocharging pressure is increased and the turbocharging pressure converges on this increased turbocharging pressure and thereafter, the target turbocharging pressure is decreased, calculated by using the hysteresis model is a correction coefficient for correcting the vane control signal so as to compensate or decrease the supplied voltage hysteresis. Then, the current vane supplied voltage is corrected by subtracting the calculated correction coefficient from the current vane supplied voltage such that the current vane supplied voltage corresponds to the opening degree increase converging vane supplied voltage. Otherwise, when the target turbocharging pressure is increased and the turbocharging pressure converges on this increased turbocharging pressure and thereafter, the target turbocharging pressure is decreased, calculated by using the hysteresis model is a correction coefficient for correcting the vane control signal so as to decrease the supplied voltage hysteresis. Then, the current vane supplied voltage is corrected by subtracting from the current vane supplied voltage, a value obtained by multiplying the calculated supplied voltage hysteresis by a coefficient smaller than "1" such that the current vane supplied voltage approaches the opening degree increase converging vane supplied voltage.

On the other hand, when the target turbocharging pressure is decreased and the turbocharging pressure converges on this decreased turbocharging pressure and thereafter, the target turbocharging pressure is increased, calculated by using the hysteresis model is a correction coefficient for correcting the vane control signal so as to compensate the supplied voltage hysteresis. Then, the current vane supplied voltage is corrected by adding the calculated correction coefficient to the current vane supplied voltage such that the current vane supplied voltage corresponds to the opening degree increase converging vane supplied voltage. Otherwise, when the target turbocharging pressure is decreased and the turbocharging pressure converges on this decreased turbocharging pressure and thereafter, the target turbocharging pressure is increased, calculated by using the hysteresis model is a correction coefficient for correcting the vane control signal so as to decrease the supplied voltage hysteresis. Then, the current vane supplied voltage is corrected by adding to the current vane supplied voltage, a value obtained by multiplying the calculated supplied voltage hysteresis by a coefficient smaller than "1" such that the current vane supplied voltage approaches the opening degree increase converging vane supplied voltage.

Next, the setting of the target turbocharging pressure according to the first embodiment will be described. According to the first embodiment, optimal turbocharging pressures depending on the engine operation condition defined by the engine speed and the required engine torque are previously obtained by an experiment, etc. Then, these obtained turbocharging pressures are memorized in the electronic control unit as base turbocharging pressures Pimb in the form of a map as a function of the engine speed NE and the required engine torque TQ as shown in Fig.3(C). Then, during the engine operation, the base turbocharging pressure Pimb corresponding to the current engine speed NE and the current required engine toruqe TQ is acquired from the map of Fig.3(C). Then, the thus acquired base turbocharging pressure Pimb is set as the target turbocharging pressure. In this regard, in the map of Fig.3(C), as the engine speed NE increases, the base turbocharging pressure Pimb increases and as the required engine torque TQ increases, the base turbocharging pressure Pimb increases.

Next, the identification of the parameter of the hysteresis model according to the first embodiment will be described. According to the first embodiment, during the engine operation, the change amount of the vane opening degree is acquired during the change of the vane opening degree. Then, the parameter of the hysteresis model (hereinafter, this parameter may be referred to as --model parameter--) memorized in the electronic control unit is identified on the basis of the change amount of the acquired vane opening degree. Then, when the thus identified model parameter is different from that of the hysteresis model memorized in the electronic control unit, the model parameter of the hysteresis model memorized in the electronic control unit is replaced with the identified model parameter. That is, according to the first embodiment, the model parameter of the hysteresis model memorized in the electronic control unit is corrected on the basis of the identified model parameter.

According to the first embodiment, the following effect is obtained. That is, when the vane opening degree decreases, the vane needs to move against the pressure of the exhaust gas which reaches the vane and on the other hand, when the vane opening degree increases, the vane does not need to move against the pressure of the exhaust gas which reaches the vane. Therefore, the activation of the vane has a hysteresis. Thus, the vane control signal when the vane opening degree is decreased and as a result, the turbocharging pressure increases to correspond to the target turbocharging pressure is different from that when the vane opening degree is increased and as a result, the turbocharging pressure decreases to correspond to the same target turbocharging pressure as the aforementioned target turbocharging pressure.

Therefore, when the vane opening degree is decreased and as a result, the turbocharging pressure increases to correspond to the target turbocharging pressure and thereafter, the target turbocharging pressure decreases, the vane control signal is changed so as to make the turbocharging pressure correspond to the decreased target turbocharging pressure and in this regard, at this time, in the case that the vane opening degree is increased and as a result, the turbocharging pressure decreases, the vane opening degree starts to increase when the vane control signal changes to reach the vane control signal when the turbocharging pressure corresponds to the same target turbocharging pressure as that before the target turbocharging pressure is decreased (i.e. the opening degree increase converging vane control signal). That is, a constant time is needed until the vane opening degree starts to increase after the change of the vane control signal is started so as to make the turbocharging pressure correspond to the decreased target turbocharging pressure. Therefore, in this case, the delay of the decrease of the turbocharging pressure occurs.

In this regard, according to the first embodiment, when the vane opening degree is decreased and as a result, the turbocharging pressure increases to correspond to the target turbocharging pressure, the vane control signal is corrected and as a result, the vane control signal corresponds to or approaches the opening degree increase converging vane control signal. Thus, thereafter, when the target turbocharging pressure is decreased and as a result, the vane control signal is changed, the vane opening degree starts to increase immediately after the change of the vane control signal is started. Thus, according to the first embodiment, obtained is the effect that the delay of the decrease of the turbocharging pressure is avoided.

For example, as described above, in the case that the vane control signal is the electric voltage and it is necessary to increase the vane supplied voltage (i.e. the electric voltage supplied to the vane) in order to decrease the vane opening degree and on the other hand, it is necessary to decrease the vane supplied voltage in order to increase the vane opening degree, the vane supplied voltage when the vane opening degree is decreased and as a result, the turbocharging pressure increases to correspond to the target turbocharging pressure is higher than that when the vane opening degree is increased and as a result, the turbocharging pressure decreases to correspond to the same target turbocharging pressure as the aforementioned target turbocharging pressure. That is, the vane supplied voltage necessary to maintain the vane opening degree at the current vane opening degree when the vane opening degree is decreased and then, reaches a certain vane opening degree is higher than that necessary to maintain the vane opening degree at the current vane opening degree when the vane opening degree is increased and then, reaches the same vane opening degree as the aforementioned certain vane opening degree.

Therefore, when the vane opening degree is decreased and as a result, the turbocharging pressure increases to correspond to the target turbocharging pressure and thereafter, the target turbocharging pressure decreases, the vane supplied voltage is decreased so as to make the turbocharging pressure correspond to the decreased target turbocharging pressure and in this regard, at this time, in the case that the vane opening degree is increased and as a result, the turbocharging pressure decreases, the vane opening degree starts to increase when the vane supplied voltage decreases to reach the vane supplied voltage when the turbocharging pressure corresponds to the same target turbocharging pressure as that before the target turbocharging pressure is decreased (i.e. the opening degree increase converging vane supplied voltage). That is, a constant time is needed until the vane opening degree starts to increase after the decrease of the vane supplied voltage is started so as to make the turbocharging pressure correspond to the decreased target turbocharging pressure. Therefore, in this case, the delay of the decrease of the turbocharging pressure occurs.

In this regard, according to the first embodiment, when the vane opening degree is decreased and as a result, the turbocharging pressure increases to correspond to the target turbocharging pressure, the vane supplied voltage is corrected and as a result, the vane supplied voltage corresponds to or approaches the opening degree increase converging vane supplied voltage. Thus, thereafter, when the target turbocharging pressure is decreased and as a result, the vane supplied voltage is decreased, the vane opening degree starts to increase immediately after the decrease of the vane supplied voltage is started. Thus, according to the first embodiment, obtained is the effect that the delay of the decrease of the turbocharging pressure is avoided.

On the other hand, when the vane opening degree is increased and as a result, the turbocharging pressure decreases to correspond to the target turbocharging pressure and thereafter, the target turbocharging pressure increases, the vane control signal is changed so as to make the turbocharging pressure correspond to the increased target turbocharging pressure and in this regard, at this time, in the case that the vane opening degree is decreased and as a result, the turbocharging pressure increases, the vane opening degree starts to decrease when the vane control signal changes to reach the vane control signal when the turbocharging pressure corresponds to the same target turbocharging pressure as that before the target turbocharging pressure is increased (i.e. the opening degree increase converging vane control voltage). That is, a constant time is needed until the vane opening degree starts to decrease after the change of the vane control signal is started so as to make the turbocharging pressure correspond to the increased target turbocharging pressure. Therefore, in this case, the delay of the increase of the turbocharging pressure occurs.

In this regard, according to the first embodiment, when the vane opening degree is increased and as a result, the turbocharging pressure decreases to correspond to the target turbocharging pressure, the vane control signal is corrected and as a result, the vane control signal corresponds to or approaches the opening degree decrease converging vane control signal. Thus, thereafter, when the target turbocharging pressure is increased and as a result, the vane control signal is changed, the vane opening degree starts to decrease immediately after the change of the vane control signal is started. Thus, according to the first embodiment, obtained is the effect that the delay of the decrease of the turbocharging pressure is avoided.

For example, as described above, in the case that the vane control signal is the electric voltage and it is necessary to increase the vane supplied voltage (i.e. the electric voltage supplied to the vane) in order to decrease the vane opening degree and on the other hand, it is necessary to decrease the vane supplied voltage in order to increase the vane opening degree, the vane supplied voltage when the vane opening degree is increased and as a result, the turbocharging pressure decreases to correspond to the target turbocharging pressure is lower than that when the vane opening degree is decreased and as a result, the turbocharging pressure increases to correspond to the same target turbocharging pressure as the aforementioned target turbocharging pressure. That is, the vane supplied voltage necessary to maintain the vane opening degree at the current vane opening degree when the vane opening degree is increased and then, reaches a certain vane opening degree is lower than that necessary to maintain the vane opening degree at the current vane opening degree when the vane opening degree is decreased and then, reaches the same vane opening degree as the aforementioned certain vane opening degree.

Therefore, when the vane opening degree is increased and as a result, the turbocharging pressure decreases to correspond to the target turbocharging pressure and thereafter, the target turbocharging pressure increases, the vane supplied voltage is increased so as to make the turbocharging pressure correspond to the increased target turbocharging pressure and in this regard, at this time, in the case that the vane opening degree is decreased and as a result, the turbocharging pressure increases, the vane opening degree starts to decrease when the vane supplied voltage increases to reach the vane supplied voltage when the turbocharging pressure corresponds to the same target turbocharging pressure as that before the target turbocharging pressure is increased (i.e. the opening degree decrease converging vane supplied voltage). That is, a constant time is needed until the vane opening degree starts to decrease after the increase of the vane supplied voltage is started so as to make the turbocharging pressure correspond to the increased target turbocharging pressure. Therefore, in this case, the delay of the increase of the turbocharging pressure occurs.

In this regard, according to the first embodiment, when the vane opening degree is increased and as a result, the turbocharging pressure decreases to correspond to the target turbocharging pressure, the vane supplied voltage is corrected and as a result, the vane supplied voltage corresponds to or approaches the opening degree decrease converging vane supplied voltage. Thus, thereafter, when the target turbocharging pressure is increased and as a result, the vane supplied voltage is increased, the vane opening degree starts to decrease immediately after the increase of the vane supplied voltage is started. Thus, according to the first embodiment, obtained is the effect that the delay of the increase of the turbocharging pressure is avoided.

Further, according to the first embodiment, the following effect is obtained. That is, as described above, the correction of the vane control signal by using the hysteresis model is effective for avoiding the delay of the decrease and increase of the turbocharging pressure.

Regarding a plurality of the engines each comprising the controlled object having the same structure, the activation property of the controlled object relative to the vane control signal may differ from one engine to another. In this case, if the hysteresis model including the model parameter identified relating to the vane of one particular engine of these engines is used for performing the correction of the control signal supplied to the vane of the other engine, the desired control property relating to the control of the turbocharging pressure may not be obtained. Obviously, if the hysteresis model including the model parameter identified relating the vane of each engine is used for performing the correction of the control signal supplied to the vane of each engine, the desired control property relating to the control of the turbocharging pressure is obtained. In this regard, the identification of the model parameter relating to each engine to construct the hysteresis model involves a considerably large burden. Further, the activation property of the vane may change with the increase of the usage time of the vane. In this case, even if the hysteresis model including the model parameter identified relating to the vane of each engine is used for performing the control of the vane of each engine, the desired control property relating to the control of the turbocharging pressure may not be obtained.

According to the first embodiment, the model parameter of the hysteresis model is identified on the basis of the change amount of the vane opening degree during the change of the vane opening degree and then, the model parameter of the hysteresis model is corrected on the basis of the identified model parameter. Therefore, even if the hysteresis model including the model parameter identified relating to the vane of the engine other than the engine of the first embodiment is used for the correction of the control signal supplied to the vane of the engine of the first embodiment, the model parameter of the hysteresis model is corrected to a value suitable for the activation property of the vane of the first embodiment and if the activation property of the vane of the first embodiment changes with the increase of the usage time of the vane, the model parameter of the hysteresis model is corrected to a value suitable for the changed activation property of the vane of the first embodiment. Thus, according to the first embodiment, obtained is the effect that the desired control property relating to the control of the turbocharging pressure can be obtained and therefore, a property relating to the emission of the exhaust gas discharged from the combustion chamber (hereinafter, this property may be referred to as --exhaust emission property--) is maintained high.

In this regard, broadly, the concept of the aforementioned correction of the vane control signal according to the first embodiment can be applied to the correction of the control signal supplied to the controlled object for controlling a predetermined controlled amount. Therefore, according to the concept of the first embodiment, broadly, the control signal to be supplied to the controlled object for controlling the controlled amount to the target controlled amount which is a target value of the controlled amount is calculated, the calculated control signal is supplied to the controlled object when the history of the change of the controlled amount does not correspond to a predetermined history (i.e. in the first embodiment, when the turbocharging pressure does not trace the history of the change of the turbocharging pressure toward the increased target turbocharging pressure in the case that the target turbocharging pressure is decreased after the turbocharging pressure converges on the increased target turbocharging pressure) and on the other hand, the calculated control signal is corrected when the history of the change of the controlled amount corresponds to the predetermined history and this corrected control signal is supplied to the controlled object.

Further, the controlled object has a hysteresis in its activation, a hysteresis model constructed on the basis of the Prisach distribution function is prepared as a model relating to the controlled object for calculating a correction coefficient for correcting the control signal supplied to the controlled object such that the hysteresis of the controlled object decreases and the correction of the control signal calculated when the history of the change of the controlled amount corresponds to the predetermined history is accomplished by correcting the calculated control signal by the correction coefficient calculated by the hysteresis model.

Further, a model parameter of the hysteresis model is identified on the basis of the change amount of the activation condition of the controlled object during the change of the activation condition of the controlled object and then, the model parameter of the hysteresis model is corrected on the basis of the identified model parameter.

Further, according to the first embodiment, as described above, a condition where the vane opening degree changes is employed as the condition for acquiring the change amount of the vane opening degree used for the identification of the model parameter of the hysteresis mode. In this regard, a condition where the acceleration of the engine is required or a condition where the deceleration of the engine is required or both of these conditions may be employed in place of the condition where the vane opening degree changes.

Further, the hysteresis model of the first embodiment is not limited to a particular mode and for example, the model shown by the following formula 1 can be employed as the hysteresis model of the first embodiment. In the formula 1, "ΔSv" is the control signal hysteresis, "Dv" is the vane opening degree before it is increased or decreased, "Δ Dv" is the change amount of the vane opening degree, "Dvi" is the vane opening degree when it is increased, "Dvd" is the vane opening degree when it is decreased, " $\eta$ (Dvi, Dvd)" is the change amount of the vane control signal memorized in the electronic control unit corresponding to each small element described later, "Dvmax" is the maximum value of the vane opening degree and "Dvmim" is the minimum value of the vane opening degree.
[Formula 1]

$$\Delta Sv = \int_{Dv}^{Dv+\Delta Dv} dDvi \int_{Dv\min}^{Dv\max} \eta(Dvi, Dvd) dDvd \qquad \cdots \quad (1)$$

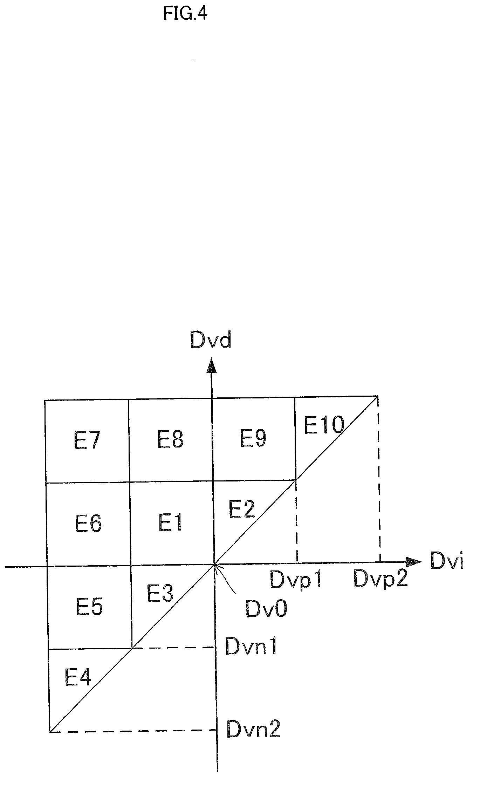

Further, the method for identifying the model parameter as described above is not limited to a particular method and as this method, the following method can be employed. That is, the change amount of the vane control signal for changing the vane opening degree by a predetermined opening degree is expressed by the coordinate shown in Fig.4 on the basis of the Preisach distribution function. In Fig.4, "Dvi" is the vane opening degree when it increases, "Dvd" is the vane opening degree when it decreases, "Dvn2", "Dvn1", "Dv0", "Dvp1" and "Dvp2" are the vane opening degrees, respectively, the vane opening degree Dvn1 is larger that Dvn2 by the predetermined opening degree, the vane opening degree Dv0 is larger that Dvn1 by the predetermined opening degree, the vane opening degree Dvp1 is larger that Dv0 by the predetermined opening degree, the vane opening degree Dvp2 is larger that Dv1 by the predetermined opening degree. Further, in Fig.4, the areas shown by "E1" to "E10", respectively are the aforementioned small elements and in the following description, these area may be referred to as small elements.

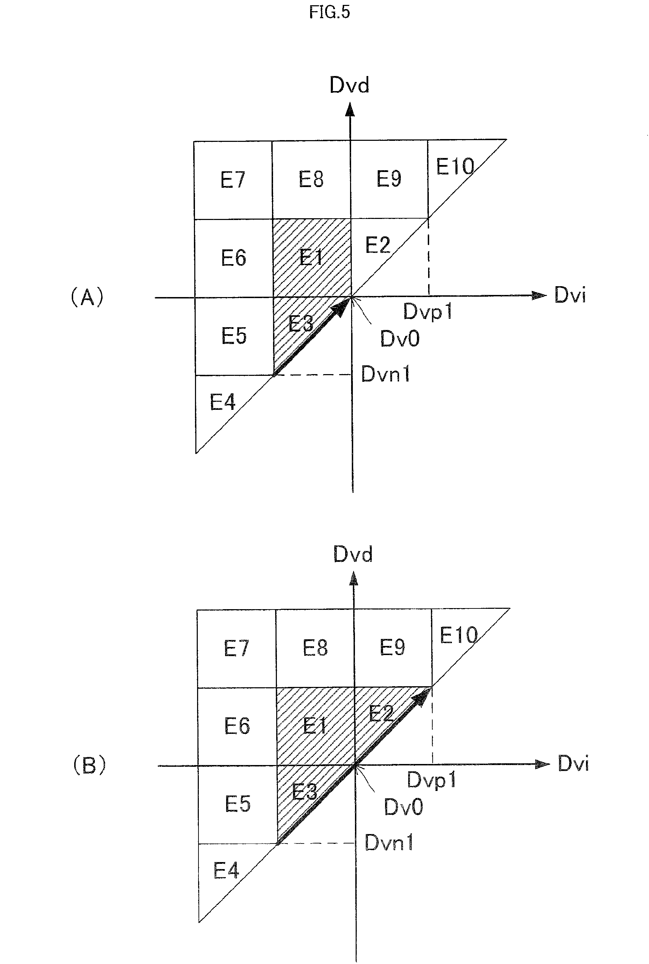

In this regard, for example, when the vane opening degree increases from the vane opening degree Dvn1 to the vane opening degree Dvp1, first, the change amount of the vane control signal which changes from the vane opening degree Dvn1 to the vane opening degree Dv0 is acquired. As shown as the hatched area in Fig.5(A), this acquired change amount of the vane control signal (hereinafter, this change amount may be referred to as --first vane control signal change amount-- and is indicated by the symbol" Δ Svb1") corresponds to the amount obtained by totalizing the change amounts of the vane control signals corresponding to the small elements E1 and E3, respectively.

Further, the change amount of the vane control signal which changes from the vane opening degree Dvn1 to the vane opening degree Dvp1 is acquired. As shown as the hatched area in Fig.5(B), this acquired change amount of the vane control signal (hereinafter, this change amount may be referred to as --second vane control signal change amount-- and is indicated by the symbol "$\Delta Sv2$") corresponds to the amount obtained by totalizing the change amounts of the vane control signals corresponding to the small elements E1, E3 and E2, respectively.

Then, as shown by the following formula 2, the change amount $\Delta Sve$ corresponding to the small element E2 is calculated by subtracting the first vane control signal change amount $\Delta Sv1$ from the second vane control signal change amount $\Delta Sv2$. That is, the change amount of the vane control signal corresponding to the small element E2, which is the model parameter of the hysteresis model, is identified.

[Formula 2]

$$\Delta Sve = \Delta Sv2 - \Delta Sv1 \quad \cdots \quad (2)$$

Then, when the thus calculated change amount $\Delta Sve$ of the vane control signal corresponding to the small element E2 is different from the change amount of the vane control signal corresponding to the small element E2 memorized in the electronic control unit, the calculated change amount $\Delta Sve$ of the vane control signal corresponding to the small element E2 is memorized in the electronic control unit as a new change amount of the vane control signal corresponding to the small element E2. That is, the change amount of the vane control signal corresponding to the small element E2, which is the model parameter of the hysteresis model, is corrected. In this case, the change amount of the vane control signal corresponding to the small element E2 is calculated using the change amount of the vane opening degree and therefore, broadly, it can be said that the model parameter of the hysteresis is corrected on the basis of the change amount of the vane opening degree.

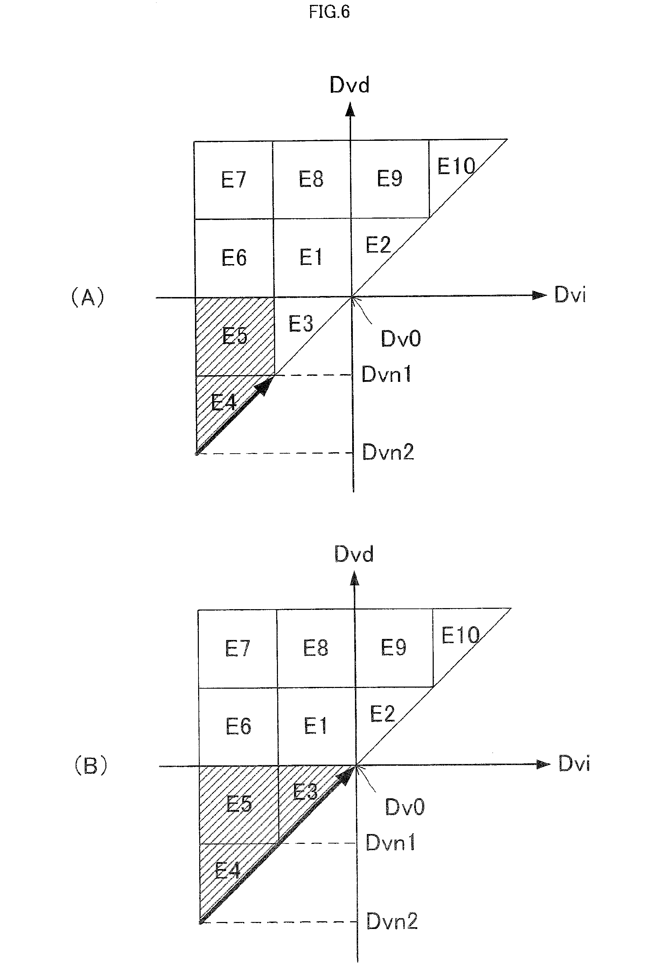

Further, for example, when the vane opening degree increases from the vane opening degree Dvn2 to the vane opening degree Dv0, first, the change amount of the vane control signal which changes from the vane opening degree Dvn2 to the vane opening degree Dvn1 is acquired. As shown as the hatched area in Fig.6(A), this acquired change amount of the vane control signal (hereinafter, this change amount may be referred to as --first vane control signal change amount-- and is indicated by the symbol "$\Delta Sv1$") corresponds to the amount obtained by totalizing the change amounts of the vane control signals corresponding to the small elements E4 and E5, respectively.

Further, the change amount of the vane control signal which changes from the vane opening degree Dvn2 to the vane opening degree Dv0 is acquired. As shown as the hatched area in Fig.6(B), this acquired change amount of the vane control signal (hereinafter, this change amount may be referred to as --second vane control signal change amount-- and is indicated by the symbol "$\Delta Sv2$") corresponds to the amount obtained by totalizing the change amounts of the vane control signals corresponding to the small elements E3, E4 and E5, respectively.

Then, as shown by the formula 2, the change amount $\Delta Sve$ corresponding to the small element E3 is calculated by subtracting the first vane control signal change amount $\Delta Sv1$ from the second vane control signal change amount $\Delta Sv2$. That is, the change amount of the vane control signal corresponding to the small element E3, which is the model parameter of the hysteresis model, is identified.

Then, when the thus calculated change amount $\Delta Sve$ of the vane control signal corresponding to the small element E3 is different from the change amount of the vane control signal corresponding to the small element E3 memorized in the electronic control unit, the calculated change amount $\Delta Sve$ of the vane control signal corresponding to the small element E3 is memorized in the electronic control unit as a new change amount of the vane control signal corresponding to the small element E3. That is, the change amount of the vane control signal corresponding to the small element E3, which is the model parameter of the hysteresis model, is corrected. In this case, the change amount of the vane control signal corresponding to the small element E3 is calculated using the change amount of the vane opening degree and therefore, broadly, it can be said that the model parameter of the hysteresis is corrected on the basis of the change amount of the vane opening degree.

As described above, according to the first embodiment, when the vane opening degree increases from a certain vane opening degree to another vane opening degree or when the vane opening degree decreases from a certain vane opening degree to another vane opening degree, the change amount of the vane control signal corresponding to each small element E1 to E10 is calculated by the aforementioned method and the change amount of the vane control signal corresponding to each small element E1 to E10 memorized in the electronic control unit is corrected on the basis of the calculated change amount of the vane control signal by aforementioned method.

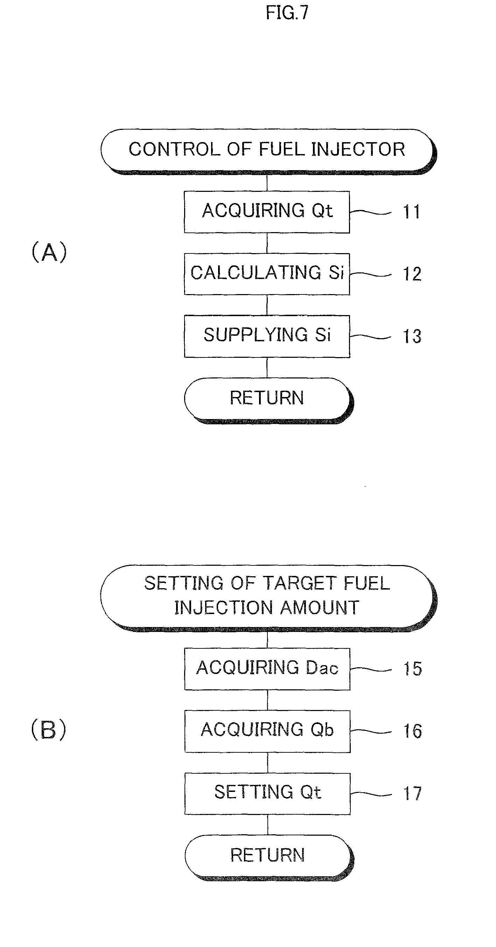

Next, an example of a routine for performing the control of the fuel injector according to the first embodiment will be described. The example of this routine is shown in Fig.7(A). This routine starts every a predetermined crank angle. When the routine of Fig.7(A) starts, first, at the step 11, the latest target fuel injection amount Qt set by a routine of Fig.7(B) (the detail of this routine will be described later) is acquired. Next, at the step 12, the command signal Si to be supplied to the fuel injector is calculated on the basis of the target fuel injection amount Qt acquired at the step 11. Next, at the step 13, the command signal Si calculated at the step 12 is supplied to the fuel injector and then, the routine ends.

Next, an example of a routine for performing the setting of the target fuel injection amount according to the first embodiment will be described. The example of this routine is shown in Fig.7(B). This routine starts every a predetermined crank angle when this routine has ended. When the routine of Fig.7(B) starts, first, at the step 15, the acceleration pedal depression amount Dac is acquired. Next, at the step 16, the base fuel injection amount Qb corresponding to the acceleration pedal depression amount Dac acquired at the step 15 is acquired from the map of Fig.3(A). Next, at the step 17, the base fuel injection amount Qb acquired at the step 16 is set as the target fuel injection amount Qt and then, the routine ends.

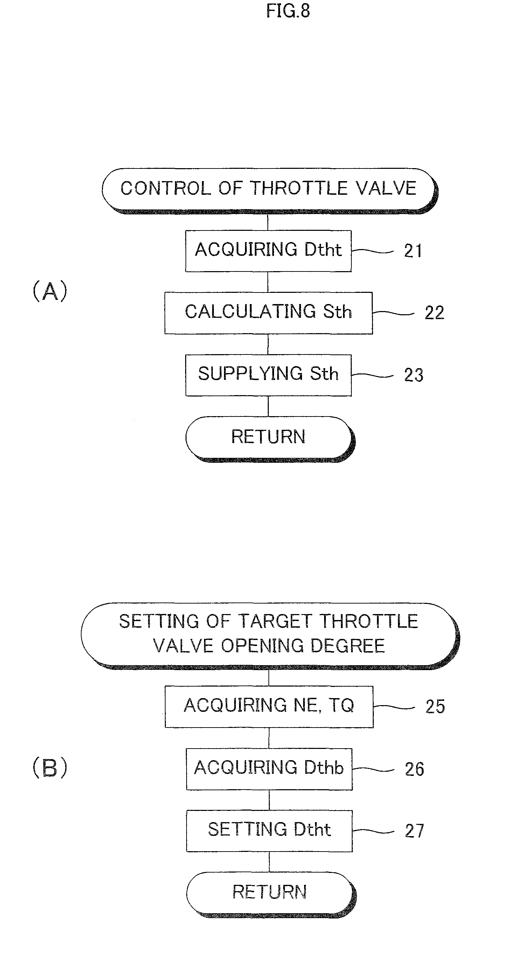

Next, an example of a routine for performing the control of the throttle valve according to the first embodiment will be described. The example of this routine is shown in Fig.8(A). This routine starts every a predetermined crank angle. When the routine of Fig.8(A) starts, first, at the step 21, the latest target throttle valve opening degree Dtht set by a routine of Fig.8(B) (the detail of this routine will be described later) is acquired. Next, at the step 22, the control signal Sth to be supplied to the throttle valve is calculated on the basis of the target throttle valve opening degree Dtht acquired at the step 21. Next, at the step 23, the control signal Sth calculated at the step 22 is supplied to the throttle valve and then, the routine ends.

Next, an example of a routine for performing the setting of the target throttle valve opening degree according to the first embodiment will be described. The example of this routine is shown in Fig.8(B). This routine starts every a predetermined crank angle. When the routine of Fig.8(B) starts, first, at the step 25, the current engine speed NE and the current required engine torque TQ are acquired. Next, at the step 26, the base throttle valve opening degree Dthb corresponding to the engine speed NE and the required engine torque TQ acquired at the step 25 is acquired from the map of Fig.3(B). Next, at the step 27, the base throttle vale opening degree Dtht acquired at the step 26 is set as the target throttle valve opening degree Dtht and then, the routine ends.

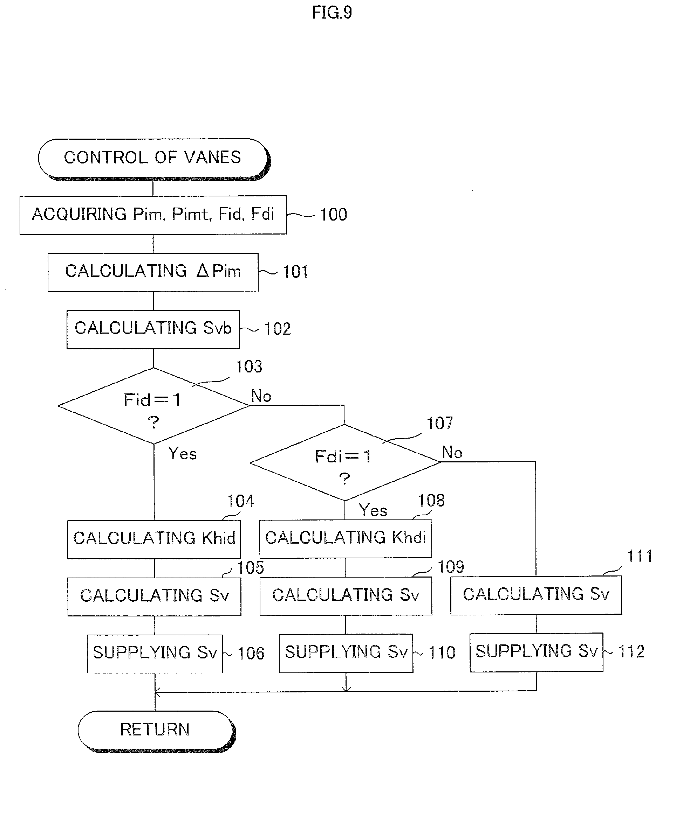

Next, an example of a routine for performing the control of the vanes according to the first embodiment will be described. The example of this routine is shown in Fig.9. This routine starts every a predetermined crank angle.

When the routine of Fig.9 starts, first, at the step 100, the latest target turbocharging pressure Pimt set by a routine of Fig.10 (the detail of this routine will be described later) and the current opening degree increase and decrease converging flags Fid and Fdi are acquired. In this regard, the opening degree increase converging flag Fid is set when the target turbocharging pressure is increased and the turbocharging pressure converges on the increased target turbocharging pressure and thereafter, the target turbocharging pressure is decreased and otherwise, this flag Fid is reset and the opening degree decrease converging flag Fdi is set when the target turbocharging pressure is decreased and the turbocharging pressure converges on the decreased target turbocharging pressure and thereafter, the target turbocharging pressure is increased and otherwise, this flag Fdi is reset.

Next, at the step 101, the difference of the turbocharging pressure acquired at the step 100 relative to the target turbocharging pressure acquired at the step 100 $\Delta$ Pim (=TPim-Pim) is calculated. Next, at the step 102, the base vane control signal Svb is calculated on the basis of the turbocharging difference $\Delta$ Pim calculated at the step 101. Next, at the step 103, it is judged if the opening degree increase convergeing flag Fid acquired at the step 100 is set (Fid=1). In this regard, when it is judged that Fid=1, the routine proceeds to the step 104. On the other hand, when it is not judged that Fid=1, the routine proceeds to the step 107.

At the step 104, the correction coefficient Khid when the turbocharging pressure converges on the increased target turbocharging pressure is calculated using the hysteresis model. Next, at the step 105, the vane control signal Sv is calculated by correcting the base vane control signal Svb calculated at the step 102 by the correction coefficient Khid calculated at the step 104. Next, at the step 106, the vane control signal Sv calculated at the step 105 is supplied to the vane and then, the routine ends.

At the step 107, it is judged if the opening degree decrease converging flag Fdi acquired at the step 100 is set (Fdi=1). In this regard, when it is judged that Fdi=1, the routine proceeds to the step 108. On the other hand, when it is not judged that Fdi=1, the routine proceeds to the step 111.

At the step 108, the correction coefficient Khdi when the turbocharging pressure converges on the decreased target turbocharging pressure is calculated using the hysteresis model. Next, at the step 109, the vane control signal Sv is calculated by correcting the base vane control signal Svb calculated at the step 102 by the correction coefficient Khdi calculated at the step 108. Next, at the step 110, the vane control signal Sv calculated at the step 109 is supplied to the vane and then, the routine ends.

Next, at the step 111, the base vane control signal Svb calculated at the step 102 is calculated as the vane control signal Sv. Next, at the step 112, the vane control signal Sv calculated at the step 111 is supplied to the vane and then, the routine ends.

Next, an example of a routine for performing the setting of the target turbocharging pressure according to the first embodiment will be described. The example of this routine is shown in Fig.10. This routine starts every a predetermined crank angle. When the routine of Fig.10 starts, first, at the step 30, the current engine speed NE and the current required engine torque TQ are acquired. Next, at the step 31, the base turbocharging pressure Pimb corresponding to the engine speed NE and the required engine torque TQ acquired at the step 30 is acquired from the map of Fig.3(C).

Next, at the step 32, the base turbocharging pressure Pimb acquired at the step 31 is set as the target turbocharging pressure Pimt and then, the routine ends.

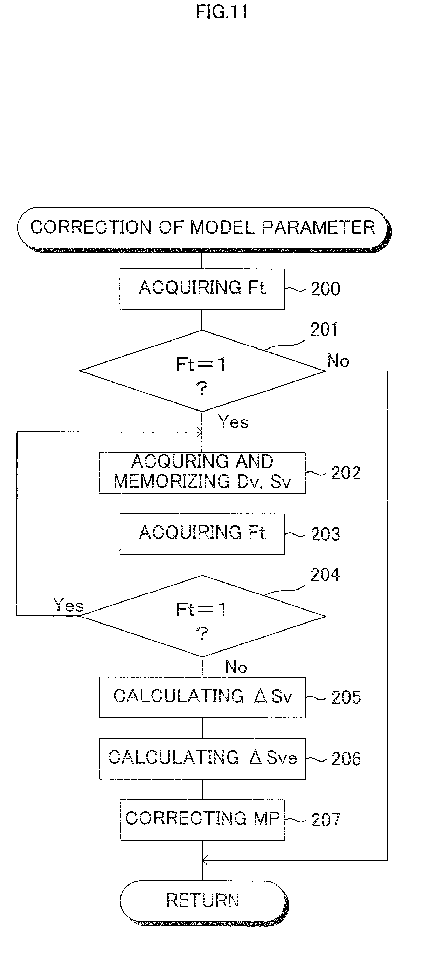

Next, an example of a routine for performing the correction of the model parameter according to the first embodiment will be described. The example of this routine is shown in Fig.11. This routine starts every a predetermined crank angle.

When the routine of Fig.11 starts, first, at the step 200, the current transient operation flag Ft is acquired. In this regard, the transient operation flag Ft is set when the engine operation is under the transient operation condition (i. e. the engine operation condition where at least one of the engine speed and the required engine torque changes) and on the other hand, the flag Ft is reset when the engine operation is under the constant operation condition (i.e. the engine operation condition where the engine speed and the required engine torque are constant). Next, at the step 201, it is judged if the transient operation flag Ft acquired at the step 200 is set (Ft=1). In this regard, when it is judged that Ft=1, the routine proceeds to the step 202. On the other hand, when it is not judged that Ft=1, the routine directly ends.

At the step 202, the current vane opening degree Dv and the current vane control signal Sv are acquired and then, these acquired vane opening degree Dv and vane control signal Sv are memorized in the electronic control unit. Next, at the step 203, the current transient operation flag Ft is acquired. Next, at the step 204, it is judged if the transient operation flag Ft acquired at the step 203 is set (Ft=1). In this regard, when it is judged that Ft=1, the routine returns to the step 202. On the other hand, when it is not judged that Ft=1, the routine proceeds to the step 205.

At the step 205, the change amount $\Delta$ Sv of the vane control signal while the vane opening degree changes by a predetermined opening degree is calculated using the vane opening degree Dv and the vane control signal Sv memorized in the electronic control unit at the step 202. Next, at the step 206, the change amount $\Delta$ Sve of the vane control signal corresponding to each small element is calculated using the change amount $\Delta$ Sv of the vane control signal calculated at the step 205. Next, at the step 207, the change amount of the vane control signal corresponding to each small element, which is the model parameter of the hysteresis model memorized in the electronic control unit is corrected using the change amount $\Delta$ Sve of the vane control signal corresponding to each small element calculated at the step 206 and then, the routine ends.

Next, the second embodiment will be described. In this regard, the constitution and the control of the second embodiment not described below are the same as those of the first embodiment or are those obviously derived from the constitution and the control of the first embodiment in consideration of the constitution and the control of the second embodiment described below.

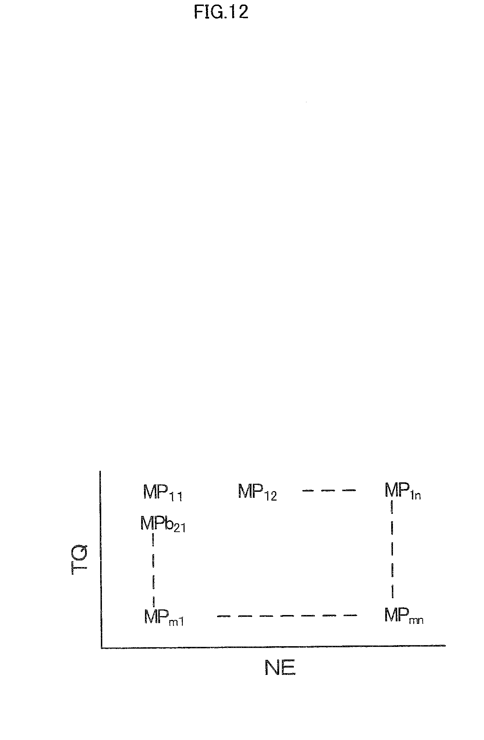

According to the second embodiment, as shown in Fig.12, as the model parameter of the hysteresis model, the combinations of the model parameters depending on the engine operation condition defined by the engine speed NE and the required engine torque TQ are memorized in the electronic control unit as the model parameter groups MP in the form of a map as a function of the engine speed NE and the required engine torque TQ. Then, during the engine operation, the model parameter group MP corresponding to the current engine speed NE and the current required engine torque TQ are acquired from the map of Fig.12 and then, this acquired model parameter group is used as the model parameter of the hysteresis model.

Then, according to the second embodiment, the correction of the model parameter described relating to the first embodiment is performed regarding the model parameter group depending on the engine speed and the required engine torque when the model parameter is identified.

Further, according to the second embodiment, when the engine output from the engine is smaller than a predetermined value (in particular, the engine operation is under the idling operation condition and the engine output is considerably small), the model parameter is identified on the basis of the vane opening degree and then, the model parameter group corresponding to the current engine operation condition is corrected on the basis of the identified model parameter.

According to the second embodiment, the following effect is obtained. That is, the number of the performance of the correction of the model parameter group corresponding to the engine operation condition, which occurs with a relatively high frequency when the engine output is larger than or equal to the predetermined value, is relatively large. In other words, the number of the performance of the correction of the model parameter group corresponding to the engine operation condition, which occurs with a relatively low frequency when the engine output is larger than or equal to the predetermined value, is relatively small. The engine operation condition, which occurs with a relatively low frequency when the engine output is larger than or equal to the predetermined value, occurs with a relatively high frequency when the engine output is smaller than the predetermined value.

In this regard, according to the second embodiment, when the engine output is smaller than the predetermined value, the model parameter is identified and then, the model parameter group corresponding to the current engine operation condition is corrected on the basis of the identified model parameter. Thus, according to the second embodiment, obtained is the effect that the desired control property relating to the control of the turbocharging pressure is obtained for all engine operation condition when the vane opening degree is controlled by the vane control signal corrected by the correction coefficient calculated using the hysteresis model.

In this regard, broadly, the concept of the aforementioned correction of the model parameter group according to the second embodiment can be applied to the correction of the model parameter of the hysteresis model for calculating the correction coefficient for correcting the control signal supplied to the controlled object for controlling a predetermined controlled amount. Therefore, according to the concept of the second embodiment, broadly, the model parameter is identified on the basis of the change amount of the activation condition of the controlled object when the engine output from the engine is smaller than the predetermined value (in particular, the engine operation is under the idling operation condition and the engine output is considerably small) and then, the model parameter corresponding to the current engine operation condition is corrected on the basis of the identified model parameter.

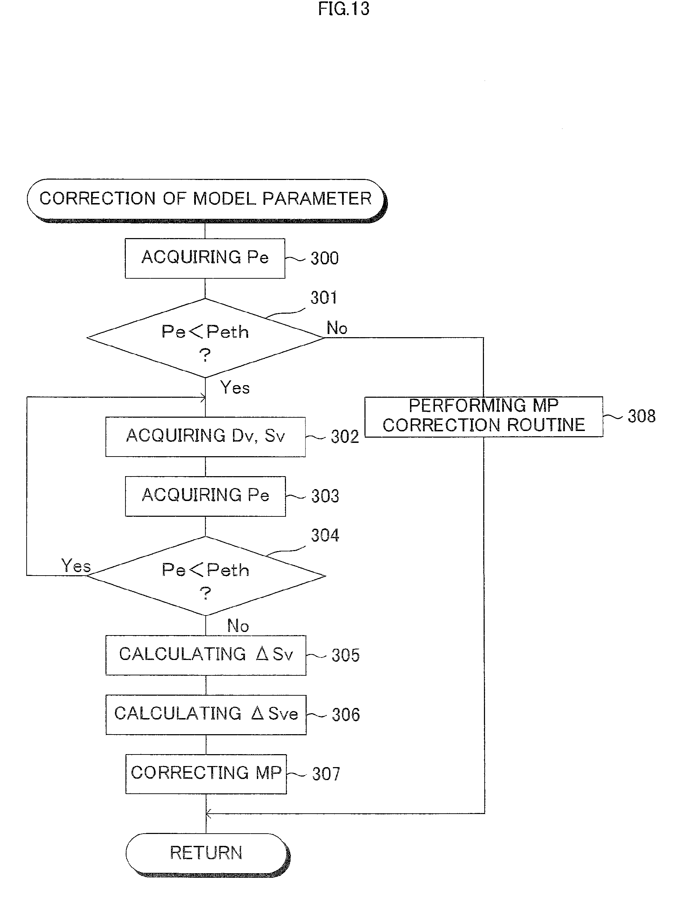

Next, an example of a routine for performing the correction of the model parameter group according to the second embodiment will be described. The example of this routine is shown in Fig.13. This routine starts every a predetermined crank angle.

When the routine of Fig.13 starts, first, at the step 300, the current engine output Pe is acquired. Next, at the step 301, it is judged if the engine output Pe acquired at the step 300 is smaller than the predetermined value Peth (Pe< Pth). In this regard, when it is judged that Pe<Pth, the routine proceeds to the step 302. On the other hand, when it is not judged that Pe<Pth, the routine proceeds to the step 308.

At the step 302, the current vane opening degree Dv and the current vane control signal Sv are acquired and then, these acquired vane opening degree and vane control signal are memorized in the electronic control unit. Next, at the step 303, the current engine output Pe is acquired. Next, at the step 304, it is judged if the engine output Pe acquired at the step 303 is smaller than the predetermined value Peth (Pe<Pth). In this regard, when it is judged that Pe<Pth, the routine returns the step 302. On the other hand, when it is not judged that Pe< Pth, the routine proceeds to the step 305.

At the step 305, the change amount $\Delta$ Sv of the vane control signal while the vane opening degree changes by a predetermined opening degree is calculated using the vane opening degree Dv and the vane control signal Sv memorized in the electronic control unit at the step 302. Next, at the step 306, the change amount $\Delta$ Sve of the vane control signal corresponding to each small element is calculated using the change amount $\Delta$ Sv of the vane control signal calculated at the step 305. Next, at the step 307, the change amount of the vane control signal corresponding to each small element, which is the model parameter of the hysteresis model memorized in the electronic control unit corresponding to the current engine operation condition, is corrected using the change amount $\Delta$ Sve of the vane control signal corresponding to each small element calculated at the step 306 and then, the routine ends.

At the step 308, the routine of Fig.11 is performed and then, the routine ends.

Next, the third embodiment will be described. In this regard, the constitution and the control of the third embodiment not described below are the same as those of the aforementioned embodiments or are those obviously derived from the constitution and the control of the aforementioned embodiments in consideration of the constitution and the control of the third embodiment described below. Further, in the following description, the term "turbocharging pressure increase converging time" means the time when the turbocharging pressure converges on the increased target turbocharging pressure in the case that the target turbocharging pressure is decreased after the turbocharging pressure converges on the increased target turbocharging pressure and the term "turbocharging pressure decrease converging time" means the time when the turbocharging pressure converges on the decreased target turbocharging pressure in the case that the target turbocharging pressure is increased after the turbocharging pressure converges on the decreased target turbocharging pressure.

According to the third embodiment, when it is predicted that the target turbocharging pressure is decreased after the target controlled amount is increased and the turbocharging pressure converges on the increased target turbocharging pressure, the turbocharging pressure increase converging time is predicted and the correction coefficient for correcting the vane control signal calculated at the predicted turbocharging pressure increase converging time is calculated as a prediction correction coefficient by using the hysteresis model. Then, the vane control signal calculated at a time earlier than the turbocharging pressure increase converging time by a predetermined time is corrected by the calculated prediction correction coefficient. Then, this corrected vane control signal is supplied to the vane.

On the other hand, according to the third embodiment, when it is predicted that the target turbocharging pressure is increased after the target turbocharging pressure is decreased and the turbocharging pressure converges on the decreased target turbocharging pressure, the turbocharging pressure decrease converging time is predicted and the correction coefficient for correcting the vane control signal calculated at the predicted turbocharging pressure decrease converging time is calculated as a prediction correction coefficient by using the hysteresis model. Then, the vane control signal calculated at a time earlier than the turbocharging pressure decrease converging time by a predetermined time is corrected by the calculated prediction correction coefficient. Then, this corrected vane control signal is supplied to the vane.

According to the third embodiment, the following effect is obtained. That is, when the target turbocharging pressure is decreased after the turbocharging pressure converges on the increased target turbocharging pressure and then, the change of the turbocharging pressure toward the decreased target turbocharging pressure is started, a delay occurs in the activation of the vane due to the hysteresis of the activation of the vane. Further, when the target turbocharging pressure is increased after the turbocharging pressure converges on the decreased target turbocharging pressure and then, the change of the turbocharging pressure toward the increased target turbocharging pressure is started, a delay occurs in the activation of the vane due to the hysteresis of the activation of the vane. Therefore, in order to obtain the desired control property relating to the control of the turbocharging pressure and therefore, obtain the high exhaust emission property at the turbocharging pressure increase or decrease converging time, it is preferred that before the turbocharging pressure is changed toward the decreased target turbocharging pressure in the case that the target turbocharging pressure is decreased after the target turbocharging pressure is increased (in particular, immediately before the turbocharging pressure is changed toward the decreased target turbocharging pressure) or before the turbocharging pressure is changed toward the increased target turbocharging pressure in the case that the target turbocharging pressure is increased after the target turbocharging pressure is decreased (in particular, immediately before the turbocharging pressure is changed toward the increased target turbocharging pressure), the vane control signal is corrected such that the delay of the activation of the vane at the turbocharging pressure increase or decrease converging time is avoided.

In this regard, according to the third embodiment, the vane control signal calculated before the turbocharging pressure increase or decrease converging time is corrected by the prediction correction coefficient and then, this corrected vane control signal is supplied to the vane. Therefore, the delay of the activation of the vane due to the hysteresis of the activation of the vane is avoided at the turbocharging pressure increase or decrease converging time. Thus, according to the third embodiment, obtained is the effect that the desired control property relating to the control of the turbocharging pressure is obtained and therefore, the high exhaust emission property is obtained.

In this regard, the method for predicting the turbocharging pressure increase or decrease converging time according to the third embodiment may be any method. Therefore, as the method for predicting the turbocharging pressure increase or decrease converging time according to the third embodiment, for example, a method for predicting the turbocharging pressure increase or decrease converging time, using the model, which is constructed for calculating the future change of the turbocharging pressure, can be employed.

Further, the turbocharging pressure increase converging time of the third embodiment may be any time as far as it is a time where the turbocharging pressure converges on the increased target turbocharging pressure in the case that the target turbocharging pressure is decreased after the turbocharging pressure converges on the increased target turbocharging pressure. Therefore, as the turbocharging pressure increase converging time of the third embodiment, for example, obtained can be a time where the turbocharging pressure converges on the increased target turbocharging pressure in the case that the target turbocharging pressure is increased due to the requirement of the acceleration of the engine and the turbocharging pressure converges on the increased target turbocharging pressure and thereafter, the target turbocharging pressure is decreased due to the requirement of the deceleration of the engine.

Further, the turbocharging pressure decrease converging time of the third embodiment may be any time as far as it is a time where the turbocharging pressure converges on the decreased target turbocharging pressure in the case that the target turbocharging pressure is increased after the turbocharging pressure converges on the decreased target turbocharging pressure. Therefore, as the turbocharging pressure decrease converging time of the third embodiment, for example, obtained can be a time where the turbocharging pressure converges on the decreased target turbocharging pressure in the case that the target turbocharging pressure is decreased due to the requirement of the deceleration of the engine and the turbocharging pressure converges on the decreased target turbocharging pressure and thereafter, the target turbocharging pressure is increased due to the requirement of the acceleration of the engine.

Further, broadly, the concept of the aforementioned correction of the vane control signal according to the third embodiment can be applied to the correction of the control signal supplied to the controlled object for controlling a predetermined controlled amount. Therefore, according to the concept of the third embodiment, broadly, the predetermined history is a history of the change of the controlled amount when the controlled amount increases toward the increased target controlled amount in the case that the target controlled amount, which is a target value of the controlled amount, is increased and then, the controlled amount converges on the increased target controlled amount and thereafter, the target controlled amount is decreased and when it is predicted that the target controlled amount is increased and then, the controlled amount converges on the increased target controlled amount and thereafter, the target controlled amount is decreased, the controlled amount increase converging time, which is a time when the controlled amount converges on the increased target controlled amount, is predicted and then, the correction coefficient for correcting the control signal calculated at the predicted controlled amount increase converging time is calculated as the predicted correction coefficient by using the hysteresis model. Then, the control signal calculated at a time earlier than the controlled amount increase converging time by a predetermined time is corrected by the calculated prediction correction coefficient. Then, this corrected control signal is supplied to the controlled object.

Further, the predetermined history is a history of the change of the controlled amount when the controlled amount decreases toward the decreased target controlled amount in the case that the target controlled amount, which is a target value of the controlled amount, is decreased and then, the controlled amount converges on the decreased target controlled amount and thereafter, the target controlled amount is increased and when it is predicted that the target controlled amount is decreased and then, the controlled amount converges on the decreased target controlled amount and thereafter, the target controlled amount is increased, the controlled amount decrease converging time, which is a time when the controlled amount converges on the decreased target controlled amount, is predicted and then, the correction coefficient for correcting the control signal calculated at the predicted controlled amount decrease converging time is calculated as the predicted correction coefficient by using the hysteresis model. Then, the control signal calculated at a time earlier than the controlled amount decrease converging time by a predetermined time is corrected by the calculated prediction correction coefficient. Then, this corrected control signal is supplied to the controlled object.

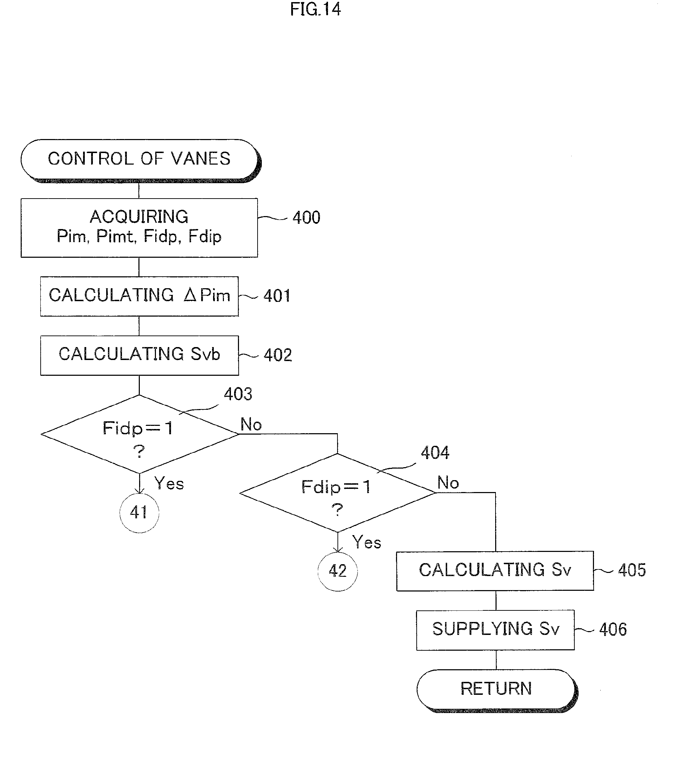

Next, an example of a routine for performing the calculation of the vane control signal according to the third embodiment will be described. The example of this routine is shown in Figs. 14 to 16. This routine starts every a predetermined crank angle.

When the routine of Figs.14 to 16 starts, first, at the step 400, the current turbocharging pressure Pim, the latest target turbocharging pressure Pimt set by the routine of Fig.10 (the detail of this routine will be described later) and the current opening degree increase and decrease converging prediction flags Fidp and Fdip are acquired. In this regard, the opening degree increase converging prediction flag Fidp is set when it is predicted that the target turbocharging pressure is increased and the turbocharging pressure converges on the increased target turbocharging pressure and thereafter, the target turbocharging pressure is decreased and otherwise, this flag Fidp is reset and the opening degree decrease converging prediction flag Fdip is set when it is predicted that the target turbocharging pressure is decreased and the turbocharging pressure converges on the decreased target turbocharging pressure and thereafter, the target turbocharging pressure is increased and otherwise, this flag Fdip is reset.

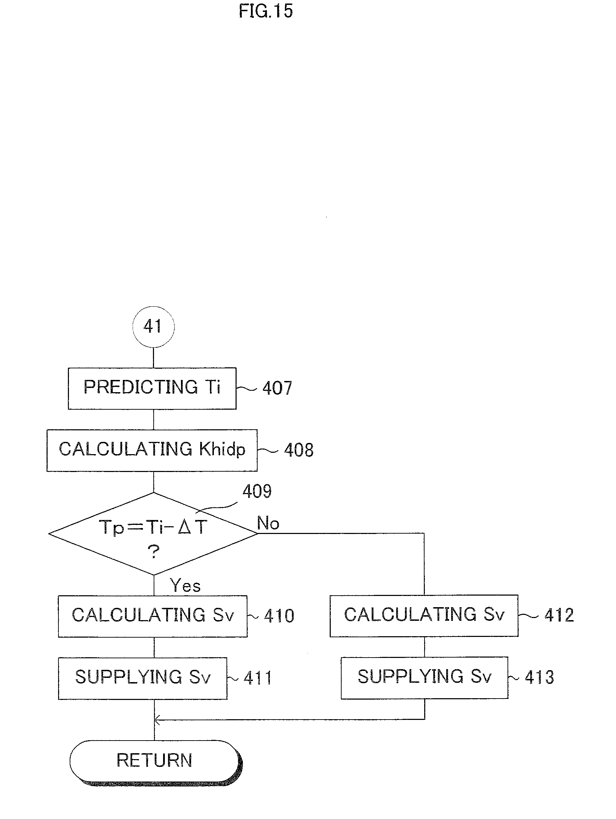

Next, at the step 401, the difference of the turbocharging pressure acquired at the step 400 relative to the target turbocharging pressure acquired at the step 400 $\Delta$ Pim (=TPim-Pim) is calculated. Next, at the step 402, the base vane control signal Svb is calculated on the basis of the turbocharging difference $\Delta$ Pim calculated at the step 401. Next, at the step 403, it is judged if the opening degree increase convergeing prediction flag Fidp acquired at the step 400 is set (Fidp=1). In this regard, when it is judged that Fidp=1, the routine proceeds to the step 407 of Fig.15. On the other hand, when it is not judged that Fidp=1, the routine proceeds to the step 404.

At the step 407 of Fig.15, the turbocharging pressure increase converging time Ti when the increasing turbocharging pressure converges on the target turbocharging pressure is predicted. Next, at the step 408, the correction coefficient at the turbocharging pressure increase converging time Ti predicted at the step 407 is calculated as the predicted correction coefficient Khidp by using the hysteresis model. Next, at the step 409, it is judged if the present time Tp is a time earlier than the turbocharging pressure increase converging time Ti predicted at the step 407 by the predetermined time $\Delta$ T (Tp=Ti-$\Delta$ T). In this regard, when it is judged that Tp=Ti-$\Delta$ T, the routine proceeds to the step 410. On the other hand, when it is not judged that Tp=Ti-$\Delta$ T, the routine proceeds to the step 412.

At the step 410 of Fig.15, the vane control signal Sv is calculated by correcting the base vane control signal Svb calculated at the step 402 of Fig.14 by the prediction correction coefficient Khidp calculated at the step 408. Next, at the step 411, the vane control signal Sv calculated at the step 410 is supplied to the vane and then, the routine ends.

At the step 412 of Fig.15, the base vane control signal Svb calculated at the step 402 is calculated as the vane control signal Sv. Next, at the step 413, the vane control signal Sv calculated at the step 412 is supplied to the vane and then, the routine ends.

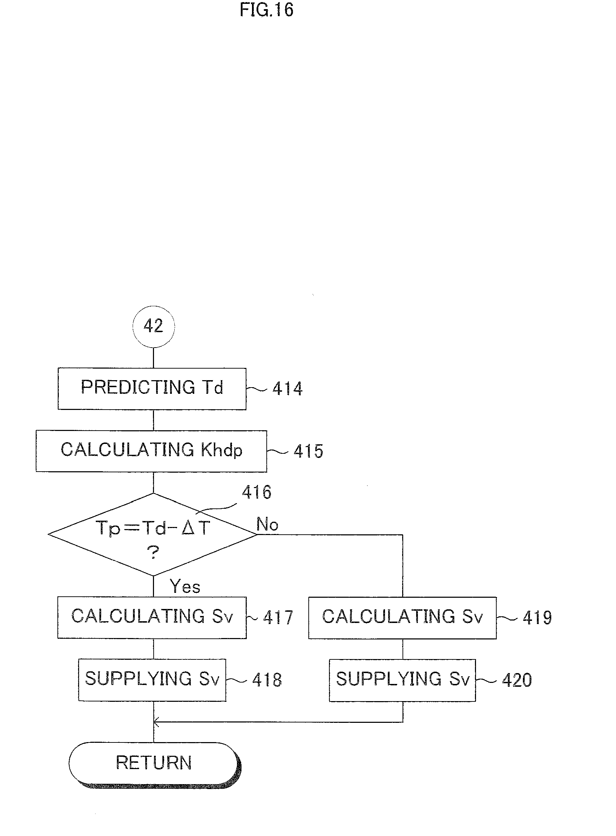

At the step 404 of Fig. 14, it is judged if the opening degree decrease convergeing prediction flag Fdip acquired at the step 400 is set (Fdip=1). In this regard, when it is judged that Fdip=1, the routine proceeds to the step 414 of Fig. 16. On the other hand, when it is not judged that Fdip=1, the routine proceeds to the step 405.

At the step 414 of Fig.16, the turbocharging pressure decrease converging time Td when the decreasing turbocharging pressure converges on the target turbocharging pressure is predicted. Next, at the step 415, the correction coefficient at the turbocharging pressure decrease converging time Td predicted at the step 414 is calculated as the predicted correction coefficient Khdip by using the hysteresis model. Next, at the step 416, it is judged if the present time Tp is a time earlier than the turbocharging pressure decrease converging time Td predicted at the step 414 by the predetermined time $\Delta$T (Tp=Td-$\Delta$T). In this regard, when it is judged that Tp=Td-$\Delta$T, the routine proceeds to the step 417. On the other hand, when it is not judged that Tp=Td-$\Delta$T, the routine proceeds to the step 419.

At the step 417 of Fig.16, the vane control signal Sv is calculated by correcting the base vane control signal Svb calculated at the step 402 of Fig.14 by the prediction correction coefficient Khdip calculated at the step 415. Next, at the step 418, the vane control signal Sv calculated at the step 417 is supplied to the vane and then, the routine ends.

At the step 419 of Fig.16, the base vane control signal Svb calculated at the step 402 is calculated as the vane control signal Sv. Next, at the step 420, the vane control signal Sv calculated at the step 419 is supplied to the vane and then, the routine ends.

At the step 405 of Fig.14, the base vane control signal Svb calculated at the step 402 is calculated as the vane control signal Sv. Next, at the step 406, the vane control signal Sv calculated at the step 405 is supplied to the vane and then, the routine ends.

The aforementioned embodiments are those which the controlled object of the invention is applied to the compression self-ignition type internal combustion engine and in this regard, the invention can be applied to the internal combustion engine other than the compression self-ignition type internal combustion engine and for example, can be applied to a spark ignition type internal combustion engine (i.e. a so-called gasoline engine).

**Claims**

1. A control device of an internal combustion engine, comprising a controlled object for controlling a predetermined control amount, wherein the device calculates a control signal to be supplied to the controlled object for controlling the controlled amount to a target controlled amount which is a target value of the controlled amount and then, when a history of a change of the controlled amount does not correspond to a predetermined history, the device supplies the calculated control signal to the controlled object and on the other hand, when the history of the change of the controlled amount corresponds to the predetermined history, the device corrects the calculated control signal and then, supplies the corrected control signal to the controlled object,
   wherein the controlled object has a hysteresis in its activation,
   wherein a hysteresis model constructed on the basis of the Prisach distribution function is prepared as a model relating to the controlled object for calculating a correction coefficient for correcting the control signal supplied to the controlled object such that the hysteresis of the controlled object decreases,
   wherein the correction of the control signal calculated when the history of the change of the controlled amount corresponds to the predetermined history is accomplished by correcting the calculated control signal by the correction coefficient calculated by the hysteresis model, and
   wherein a model parameter of the hysteresis model is identified on the basis of the change amount of the activation condition of the controlled object during the change of the activation condition of the controlled object and then, the model parameter of the hysteresis model is corrected on the basis of the identified model parameter.

2. The control device of the engine of claim 1, wherein the model parameters are prepared depending on the operation condition of the engine, the model parameter corresponding to the operation condition of the engine of the prepared model parameters is used as the model parameter of the hysteresis model and the model parameter, which is prepared corresponding to the operation condition of the engine when the identification of the model parameter is performed, is corrected on the basis of the identified model parameter, and
   wherein jwhen an engine output, which is an output from the engine, is smaller than a predetermined value, the model parameter is identified on the basis of the change amount of the activation condition of the controlled object and then, the model parameter, which is prepared corresponding to the operation condition of the engine when the identification of the model parameter is performed on the basis of the identified model parameter, is corrected.

3. The control device of the engine of any of claims 1 and 2, wherein the predetermined history is a history of the change of the controlled amount when the controlled amount increases toward the increased target controlled amount in the case that the target controlled amount is increased and the controlled amount converges on the increased target controlled amount and thereafter, the target controlled amount is decreased, and
   when it is predicted that the target controlled amount is decreased after the target controlled amount is increased and the controlled amount converges on the increased target controlled amount, a controlled amount increase converging time, which is a time when the controlled amount converges on the increased target controlled amount, is predicted,
   then, the correction coefficient for correcting the control signal calculated at the predicted controlled amount increase converging time is calculated as a prediction correction coefficient by using the hysteresis model, then,
   the control signal calculated at a time earlier than the controlled amount increase converging time by a predetermined time is corrected by the calculated prediction correction coefficient and
   then, the corrected control signal is supplied to the controlled object or
   wherein the predetermined history is a history of the change of the controlled amount when the controlled amount decreases toward the decreased target controlled amount in the case that the target controlled amount is decreased and the controlled amount converges on the decreased target controlled amount and thereafter, the target controlled amount is increased,
   when it is predicted that the target controlled amount is decreased after the target controlled amount is decreased and the controlled amount converges on the decreased target controlled amount, a controlled amount decrease converging time, which is a time when the controlled amount converges on the decreased target controlled amount, is predicted,
   then, the correction coefficient for correcting the control signal calculated at the predicted controlled amount decrease converging time is calculated as a prediction correction coefficient by using the hysteresis model,
then, the control signal calculated at a time earlier than the controlled amount decrease converging time by a predetermined time is corrected by the calculated prediction correction coefficient and
then, the corrected control signal is supplied to the controlled object.

4. The control device of the engine of claim 3, wherein in the case that the target controlled amount is increased due to the requirement of the acceleration of the engine and then, the controlled amount converges on the increased target controlled amount and thereafter, the target controlled amount is decreased due to the requirement of the deceleration of the engine, the predetermined history is a history of the change of the controlled amount when the controlled amount increases toward the increased target controlled amount or
wherein in the case that the target controlled amount is decreased due to the requirement of the acceleration of the engine and then, the controlled amount converges on the decreased target controlled amount and thereafter, the target controlled amount is increased due to the requirement of the deceleration of the engine, the predetermined history is a history of the change of the controlled amount when the controlled amount decreases toward the decreased target controlled amount.

5. The control device of the engine of claim 3, wherein in the case that the target controlled amount is increased due to the requirement of the deceleration of the engine and then, the controlled amount converges on the increased target controlled amount and thereafter, the target controlled amount is decreased due to the requirement of the acceleration of the engine, the predetermined history is a history of the change of the controlled amount when the controlled amount increases toward the increased target controlled amount or
wherein in the case that the target controlled amount is decreased due to the requirement of the deceleration of the engine and then, the controlled amount converges on the decreased target controlled amount and thereafter, the target controlled amount is increased due to the requirement of the deceleration of the engine, the predetermined history is a history of the change of the controlled amount when the controlled amount decreases toward the decreased target controlled amount.

6. The control device of the engine of any of claims 1 to 5, wherein the engine comprises a turbocharger, the turbocharger has a compressor arranged in an intake passage, an exhaust turbine arranged in an exhaust passage and exhaust flow change means for changing the flow mount or the flow rate of the exhaust gas flowing through the exhaust turbine, the controlled object is the exhaust flow change means and the controlled amount is a turbocharging pressure which is a pressure of a gas in the intake passage compressed by the compressor.

FIG.1

EXHAUST GAS INFLOW DIRECTION

60V

R2

R2

R2

A

R2

E

R2

EXHAUST GAS INFLOW AMOUNT IS MINIMUM.

R2 EXHAUST GAS INFLOW AMOUNT IS MAXIMUM.

R2

60B

R1

FIG.2

EP 2 759 692 A1

FIG.3

(A)

$Q_b$

$D_{ac}$

(B)

$TQ$

$Dthb_{11}$   $Dthb_{12}$ — — —   $Dthb_{1n}$
$Dthb_{21}$
$Dthb_{m1}$ — — — — — — — $Dthb_{mn}$

$NE$

(C)

$TQ$

$Pimb_{11}$   $Pimb_{12}$ — — —   $Pimb_{1n}$
$Pimb_{21}$
$Pimb_{m1}$ — — — — — — $Pimb_{mn}$

$NE$

FIG.4

FIG.5

(A)

(B)

FIG.6

FIG.7

(A)

```
CONTROL OF FUEL INJECTOR

        ACQUIRING Qt        ~ 11

        CALCULATING Si      ~ 12

        SUPPLYING Si        ~ 13

            RETURN
```

(B)

```
SETTING OF TARGET FUEL
   INJECTION AMOUNT

        ACQUIRING Dac       ~ 15

        ACQUIRING Qb        ~ 16

        SETTING Qt          ~ 17

            RETURN
```

## FIG.8

(A)

```
┌─────────────────────────────────┐
│   CONTROL OF THROTTLE VALVE      │
└─────────────────────────────────┘
                │
        ┌───────────────┐
        │ ACQUIRING Dtht│──── 21
        └───────────────┘
                │
        ┌───────────────┐
        │ CALCULATING Sth│──── 22
        └───────────────┘
                │
        ┌───────────────┐
        │ SUPPLYING Sth │──── 23
        └───────────────┘
                │
        ┌───────────────┐
        │    RETURN      │
        └───────────────┘
```

(B)

```
┌─────────────────────────────────┐
│  SETTING OF TARGET THROTTLE      │
│    VALVE OPENING DEGREE          │
└─────────────────────────────────┘
                │
        ┌───────────────┐
        │ ACQUIRING NE, TQ│──── 25
        └───────────────┘
                │
        ┌───────────────┐
        │ ACQUIRING Dthb│──── 26
        └───────────────┘
                │
        ┌───────────────┐
        │ SETTING Dtht  │──── 27
        └───────────────┘
                │
        ┌───────────────┐
        │    RETURN      │
        └───────────────┘
```

FIG.9

```
         ┌─────────────────────┐
         │  CONTROL OF VANES   │
         └─────────────────────┘
                    │
    ┌───────────────────────────────┐
    │ ACQUIRING Pim, Pimt, Fid, Fdi │─── 100
    └───────────────────────────────┘
                    │
        ┌─────────────────────┐
        │ CALCULATING ΔPim    │─── 101
        └─────────────────────┘
                    │
        ┌─────────────────────┐
        │ CALCULATING Svb     │─── 102
        └─────────────────────┘
                    │
                   103
              ◇ Fid=1 ?  ◇──── No
                    │ Yes                107
                    │            ◇ Fdi=1 ? ◇──── No
                    │                │ Yes
            104     │         108     │
    ┌──────────────────┐  ┌──────────────────┐
    │ CALCULATING Khid │  │ CALCULATING Khdi │
    └──────────────────┘  └──────────────────┘
            105  │            109  │                    111
    ┌──────────────┐   ┌──────────────┐        ┌──────────────┐
    │ CALCULATING Sv│   │ CALCULATING Sv│       │ CALCULATING Sv│
    └──────────────┘   └──────────────┘        └──────────────┘
            │                │                         │
    ┌─────────────┐    ┌─────────────┐          ┌─────────────┐
    │ SUPPLYING Sv│─106│ SUPPLYING Sv│─110      │ SUPPLYING Sv│─112
    └─────────────┘    └─────────────┘          └─────────────┘
                    │
         ┌─────────────────────┐
         │       RETURN        │
         └─────────────────────┘
```

FIG.10

```
┌─────────────────────────────┐
│      SETTING OF TARGET      │
│   SUPERCHARGING PRESSURE    │
└─────────────────────────────┘
              │
┌─────────────────────────────┐
│      ACQUIRING NE, TQ       │──── 30
└─────────────────────────────┘
              │
┌─────────────────────────────┐
│      ACQUIRING Pimb         │──── 31
└─────────────────────────────┘
              │
┌─────────────────────────────┐
│       SETTING Pimt          │──── 32
└─────────────────────────────┘
              │
       ┌─────────────┐
       │   RETURN    │
       └─────────────┘
```

FIG.11

```
        ( CORRECTION OF MODEL PARAMETER )
                        │
                ┌───────────────┐
                │ ACQUIRING Ft  │── 200
                └───────────────┘
                        │
                      201
                  ◇ Ft=1 ◇ ──── No ──┐
                  ◇  ?   ◇           │
                        │ Yes        │
          ┌─────────────┘            │
          │     ┌───────────────┐    │
          │     │ ACQURING AND  │── 202
          │     │MEMORIZING Dv, Sv│  │
          │     └───────────────┘    │
          │             │            │
          │     ┌───────────────┐    │
          │     │ ACQUIRING Ft  │── 203
          │     └───────────────┘    │
          │             │            │
          │           204            │
          │      ◇ Ft=1 ◇            │
     Yes ─┘      ◇  ?   ◇            │
                        │ No         │
                ┌───────────────┐    │
                │CALCULATING ΔSv │── 205
                └───────────────┘    │
                        │            │
                ┌───────────────┐    │
                │CALCULATING ΔSve│── 206
                └───────────────┘    │
                        │            │
                ┌───────────────┐    │
                │ CORRECTING MP │── 207
                └───────────────┘    │
                        │◄───────────┘
                   (  RETURN  )
```

FIG.12

## FIG.13

```
CORRECTION OF MODEL PARAMETER

        ACQUIRING Pe  ~ 300

              301
        Pe < Peth      No
            ?
           Yes                    PERFORMING MP      ~ 308
                                CORRECTION ROUTINE
      ACQUIRING Dv, Sv  ~ 302

       ACQUIRING Pe  ~ 303

              304
 Yes    Pe < Peth
            ?
           No
     CALCULATING △Sv   ~ 305

     CALCULATING △Sve  ~ 306

      CORRECTING MP  ~ 307

            RETURN
```

FIG.14

```
        ┌──────────────────────────┐
        │     CONTROL OF VANES      │
        └──────────────────────────┘
                     │
        ┌──────────────────────────┐
        │        ACQUIRING         │──── 400
        │   Pim, Pimt, Fidp, Fdip  │
        └──────────────────────────┘
                     │
        ┌──────────────────────────┐
        │   CALCULATING △Pim       │─── 401
        └──────────────────────────┘
                     │
        ┌──────────────────────────┐
        │     CALCULATING Svb       │─── 402
        └──────────────────────────┘
                     │
                    403
              ╱─────────────╲          No
             ╱   Fidp=1      ╲───────────────┐
             ╲      ?        ╱                │
              ╲─────────────╱                404
                     │ Yes            ╱─────────────╲      No
                    ┌──┐             ╱   Fdip=1      ╲──────────┐
                    │41│             ╲      ?        ╱          │
                    └──┘              ╲─────────────╱           │
                                           │ Yes               │
                                          ┌──┐    ┌──────────────────────────┐
                                          │42│    │      CALCULATING Sv       │─── 405
                                          └──┘    └──────────────────────────┘
                                                               │
                                                  ┌──────────────────────────┐
                                                  │       SUPPLYING Sv        │─── 406
                                                  └──────────────────────────┘
                                                               │
                                                  ┌──────────────────────────┐
                                                  │          RETURN           │
                                                  └──────────────────────────┘
```

FIG.15

```
                    ( 41 )
                      │
         ┌────────────────────────┐
         │    PREDICTING Ti        ├── 407
         └────────────────────────┘
                      │
         ┌────────────────────────┐
         │  CALCULATING Khidp      ├── 408
         └────────────────────────┘
                      │            409
                     ╱ ╲
                    ╱   ╲         No
              ┌───╱ Tp=Ti─ΔT ╲──────────────────┐
                  ╲    ?    ╱                     │
                   ╲       ╱                      │
                    ╲     ╱                       │
                     Yes                          │
         ┌────────────────────┐      ┌────────────────────┐
         │  CALCULATING Sv     ├─410  │  CALCULATING Sv     ├─412
         └────────────────────┘      └────────────────────┘
                      │                          │
         ┌────────────────────┐      ┌────────────────────┐
         │  SUPPLYING Sv       ├─411  │  SUPPLYING Sv       ├─413
         └────────────────────┘      └────────────────────┘
                      │                          │
                      │←─────────────────────────┘
              ╭───────────────╮
              │    RETURN      │
              ╰───────────────╯
```

FIG.16

42

PREDICTING Td — 414

CALCULATING Khdp — 415

416

$Tp=Td-\Delta T$ ? —No—

Yes

CALCULATING Sv — 417    CALCULATING Sv — 419

SUPPLYING Sv — 418    SUPPLYING Sv — 420

RETURN

## INTERNATIONAL SEARCH REPORT

| | International application No. |
|---|---|
| | PCT/JP2011/071323 |

### A. CLASSIFICATION OF SUBJECT MATTER
*F02D23/00*(2006.01)i

According to International Patent Classification (IPC) or to both national classification and IPC

### B. FIELDS SEARCHED

Minimum documentation searched (classification system followed by classification symbols)
F02D23/00

Documentation searched other than minimum documentation to the extent that such documents are included in the fields searched
Jitsuyo Shinan Koho          1922-1996     Jitsuyo Shinan Toroku Koho     1996-2011
Kokai Jitsuyo Shinan Koho     1971-2011     Toroku Jitsuyo Shinan Koho     1994-2011

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2001-132463 A  (Nissan Motor Co., Ltd.),<br>15 May 2001 (15.05.2001),<br>abstract; claim 1<br>& EP 1079083 A2 | 1-2,6<br>3-5 |
| Y<br>A | JP 2002-127003 A  (Hiroshi EDA et al.),<br>08 May 2002 (08.05.2002),<br>paragraph [0015]<br>(Family: none) | 1-2,6<br>3-5 |

☐ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 November, 2011 (02.11.11) | 15 November, 2011 (15.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001132463 A

- JP 2002257673 A